# EUROPEAN PATENT APPLICATION

(11) **EP 4 663 977 A1**
(43) Date of publication of application: **17.12.2025**
(21) Application number: 24753342.5
(22) Date of filing: 06.02.2024
(51) Int. Cl.: F16H 3/44, F16H 3/52

(54) **VEHICLE TRANSMISSION**

(30) Priority: 08.02.2023 JP 2023017735
(71) Applicant: AISIN CORPORATION, Kariya-shi, Aichi 448-8650 (JP)
(72) Inventor: ISONO, Hiroshi, Kariya-shi, Aichi 448-8650 (JP)
(74) Representative: Winter, Brandl - Partnerschaft mbB
(86) International application number: PCT/JP2024/003844
(87) International publication number: WO 2024/166899

(57) **Abstract**

A planetary gear mechanism (P) includes a first rotating element (E1), a second rotating element (E2), and a third rotating element (E3). The first rotating element (E1) rotates with an input member (I). The second rotating element (E2) rotates with an output member (O). A switching mechanism (S) includes: a fourth rotating element (E4) that is disposed on a first axis (X1) on which the planetary gear mechanism (P) is disposed, and rotates with the first rotating element (E1) or the second rotating element (E2); a fifth rotating element (E5) that is disposed on a second axis (X2) different from the first axis (X1), and rotates in conjunction with the third rotating element (E3); a sixth rotating element (E6) that is disposed on the second axis (X2), and rotates in conjunction with the fourth rotating element (E4); a first engagement mechanism (3) that connects and disconnects power transmission between the fifth rotating element (E5) and the sixth rotating element (E6); and a second engagement mechanism (4) that selectively fixes the fifth rotating element (E5) to a non-rotating member (NR).

## Description

### TECHNICAL FIELD

The present invention relates to vehicle transmissions including an input member drivingly connected to a driving source, an output member drivingly connected to a wheel, a planetary gear mechanism, and a switching mechanism that switches the state of the planetary gear mechanism.

### BACKGROUND ART

An example of such a vehicle transmission is disclosed in Patent Document 1 below. In the following description of the background art, signs used in Patent Document 1 are shown in parentheses.

In the vehicle transmission disclosed in Patent Document 1, a planetary gear mechanism (22) includes a sun gear (51a), a carrier (55), a first ring gear (53), and a second ring gear (54). The carrier (55) supports a large diameter pinion gear (52a) that meshes with both the sun gear (51a) and the first ring gear (53) and a small diameter pinion gear (52b) that meshes with the second ring gear (54), in such a manner that the large diameter pinion gear (52a) and the small diameter pinion gear (52b) rotate together.

A switching mechanism (23) includes: a first engagement mechanism (23a) that engages and disengages the first ring gear (53) with and from a non-rotating member (42); and a second engagement mechanism (23b) that engages and disengages the second ring gear (54) with and from the non-rotating member (42). When the first engagement mechanism (23a) is in the disengaged state and the second engagement mechanism (23b) is in the engaged state, a first shift speed (low gear) with a relatively high speed ratio is formed. When the first engagement mechanism (23a) is in the engaged state and the second engagement mechanism (23b) is in the disengaged state, a second shift speed (high gear) with a relatively low speed ratio is formed.

### Related Art Documents

### Patent Documents

Patent Document 1: Japanese Unexamined Patent Application Publication No. 2012-240471 (JP 2012-240471 A)

### SUMMARY OF THE INVENTION

### Problem to be Solved by the Invention

In the vehicle transmission disclosed in Patent Document 1, the first engagement mechanism (23a) and the second engagement mechanism (23b) are coaxial with the planetary gear mechanism (22), and are disposed radially outward of the planetary gear mechanism (22). Therefore, the first engagement mechanism (23a) and the second engagement mechanism (23b) tend to have a large dimension in the radial direction, and the vehicle transmission tends to have a large overall size in the radial direction.

It is desired to implement a vehicle transmission that facilitates reduction in size of at least part of the vehicle transmission in the radial direction in a configuration including a planetary gear mechanism and a switching mechanism configured to switch the state of the planetary gear mechanism.

### Means for Solving the Problem

In view of the above, a characteristic configuration of a vehicle transmission is that the vehicle transmission includes:
an input member drivingly connected to a driving source;
an output member drivingly connected to a wheel;
a planetary gear mechanism including a first rotating element, a second rotating element, and a third rotating element, the planetary gear mechanism being configured such that an order of rotational speeds of the first rotating element, the second rotating element, and the third rotating element are the first rotating element, the second rotating element, and the third rotating element; and
a switching mechanism configured to switch the state of the planetary gear mechanism.

The first rotating element is connected to the input member so as to rotate with the input member.

The second rotating element is connected to the output member so as to rotate with the output member.

The switching mechanism includes
a fourth rotating element disposed on a first axis that is an axis on which the planetary gear mechanism is disposed, and connected to the first rotating element or the second rotating element so as to rotate with the first rotating element or the second rotating element,
a fifth rotating element disposed on a second axis that is an axis different from the first axis, and configured to rotate in conjunction with the third rotating element,
a sixth rotating element disposed on the second axis and configured to rotate in conjunction with the fourth rotating element,
a first engagement mechanism configured to connect and disconnect power transmission between the fifth rotating element and the sixth rotating element, and
a second engagement mechanism configured to selectively fix the fifth rotating element to a non-rotating member.

With this characteristic configuration, when the first engagement mechanism is switched to an engaged state and the second engagement mechanism is switched to a disengaged state, the fifth rotating element and the sixth rotating element rotate together. A first shift speed can thus be formed in which rotation of the input member is reduced in speed and transmitted to the output member at a constant rotational speed ratio between the first rotating element and the third rotating element. When the first engagement mechanism is switched to the disengaged state and the second engagement mechanism is switched to the engaged state, the fifth rotating element is fixed to the non-rotating member. A second shift speed can thus be formed in which rotation of the input member is reduced in speed and transmitted to the output member.

In this characteristic configuration, the first rotating element of the planetary gear mechanism is connected to the input member so as to rotate with the input member, and the second rotating element of the planetary gear mechanism is connected to the output member so as to rotate with the output member. Therefore, the input member and the output member are disposed on the first axis. The fifth rotating element and the sixth rotating element of the switching mechanism are disposed on the second axis. The first engagement mechanism of the switching mechanism is configured to connect and disconnect power transmission between the fifth rotating element and the sixth rotating element, and the second engagement mechanism of the switching mechanism is configured to selectively fix the fifth rotating element to the non-rotating member.

As described above, with this characteristic configuration, the first and second shift speeds can be selectively formed by the input member and the output member that are disposed coaxially with the planetary gear mechanism, and the switching mechanism partially disposed on a different axis from the planetary gear mechanism. This facilitates reduction in size of at least part of the vehicle transmission in the radial direction in the configuration including the planetary gear mechanism and the switching mechanism configured to switch the state of the planetary gear mechanism.

### BRIEF DESCRIPTION OF THE DRAWINGS

[FIG. 1] FIG. 1 is a sectional view of a vehicle drive device including a vehicle transmission according to a first embodiment.
[FIG. 2] FIG. 2 is a skeleton diagram of the vehicle drive device including the vehicle transmission according to the first embodiment.
[FIG. 3] FIG. 3 is a partial enlarged section of the vehicle transmission according to the first embodiment.
[FIG. 4] FIG. 4 is a velocity diagram of a planetary gear mechanism of the vehicle transmission according to the first embodiment.
[FIG. 5] FIG. 5 is a sectional view of a vehicle drive device including a vehicle transmission according to a second embodiment.
[FIG. 6] FIG. 6 is a skeleton diagram of the vehicle drive device including the vehicle transmission according to the second embodiment.
[FIG. 7] FIG. 7 is a sectional view of a vehicle drive device including a vehicle transmission according to a third embodiment.
[FIG. 8] FIG. 8 is a skeleton diagram of the vehicle drive device including the vehicle transmission according to the third embodiment.
[FIG. 9] FIG. 9 is a sectional view of a vehicle drive device including a vehicle transmission according to a fourth embodiment.
[FIG. 10] FIG. 10 is a skeleton diagram of the vehicle drive device including the vehicle transmission according to the fourth embodiment.
[FIG. 11] FIG. 11 is a partial enlarged section of the vehicle transmission according to the fourth embodiment.
[FIG. 12] FIG. 12 is a sectional view of a vehicle drive device including a vehicle transmission according to a fifth embodiment.
[FIG. 13] FIG. 13 is a skeleton diagram of the vehicle drive device including the vehicle transmission according to the fifth embodiment.
[FIG. 14] FIG. 14 is a sectional view of a vehicle drive device including a vehicle transmission according to sixth and seventh embodiments.
[FIG. 15] FIG. 15 is a sectional view of the vehicle drive device including the vehicle transmission according to the sixth embodiment.
[FIG. 16] FIG. 16 is a skeleton diagram of the vehicle drive device including the vehicle transmission according to the sixth embodiment.
[FIG. 17] FIG. 17 is a sectional view of the vehicle drive device including the vehicle transmission according to the seventh embodiment.
[FIG. 18] FIG. 18 is a skeleton diagram of the vehicle drive device including the vehicle transmission according to the seventh embodiment.

### MODES FOR CARRYING OUT THE INVENTION

### 1. First Embodiment

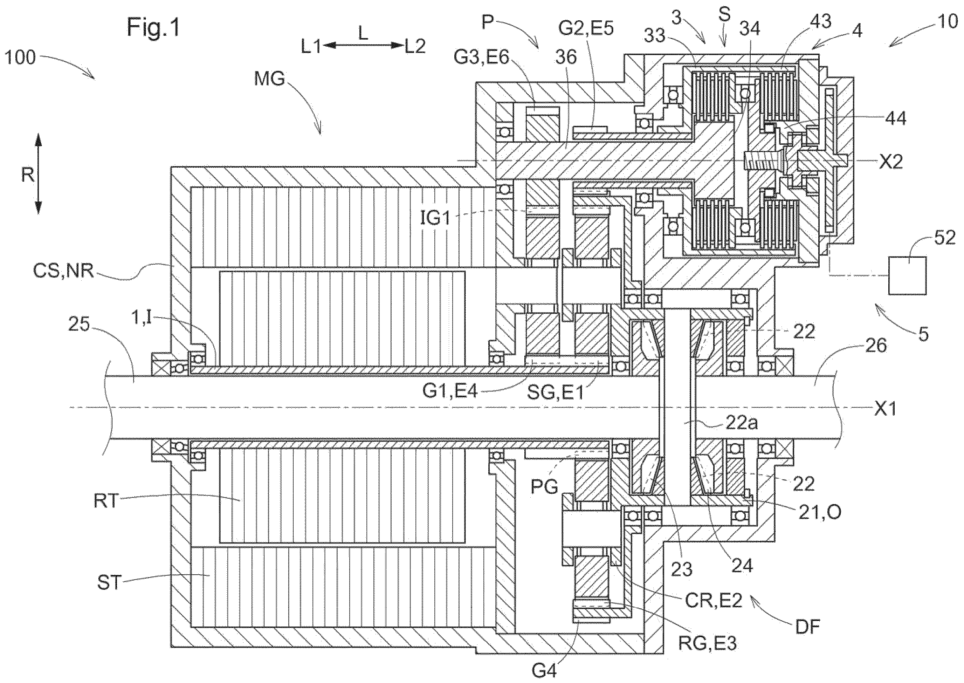

Hereinafter, a vehicle transmission 10 according to a first embodiment will be described with reference to FIGS. 1 to 4. The vehicle transmission 10 is provided in a vehicle drive device 100.

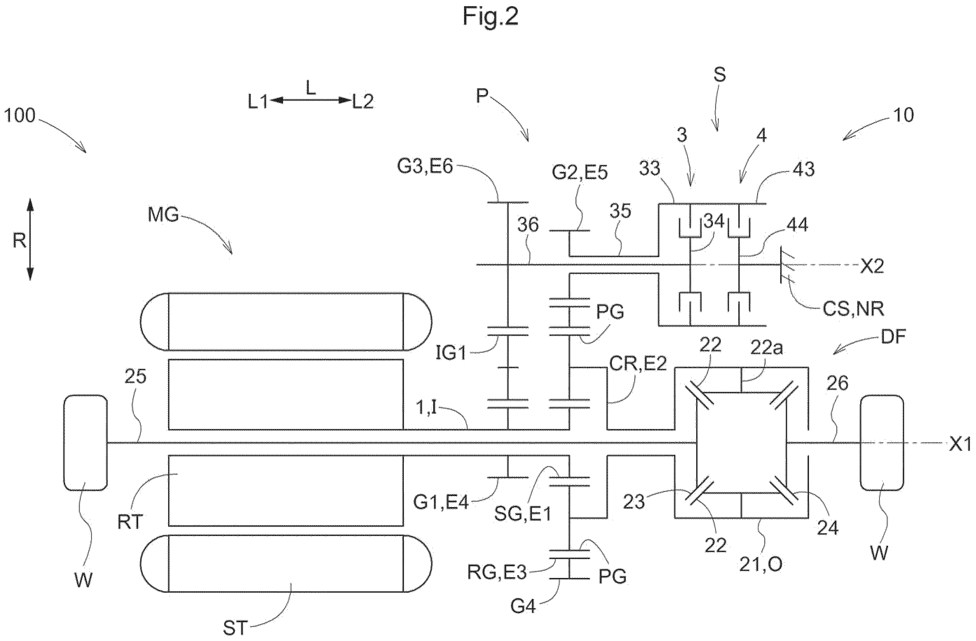

As shown in FIGS. 1 and 2, in the present embodiment, the vehicle drive device 100 includes, in addition to the vehicle transmission 10, a rotating electrical machine MG that is a driving source, and a case CS (see FIG. 1) that houses the vehicle transmission 10 and the rotating electrical machine MG.

The vehicle transmission 10 includes an input member I drivingly connected to the driving source (in this example, the rotating electrical machine MG), an output member O drivingly connected to a wheel W (see FIG. 2), a planetary gear mechanism P, and a switching mechanism S that switches the state of the planetary gear mechanism P. In the present embodiment, the vehicle transmission 10 further includes a differential gear mechanism DF that distributes rotation transmitted from the rotating electrical machine MG to a pair of the wheels W.

In the present application, "drivingly connected" refers to a state in which two rotating elements are connected such that a driving force can be transmitted, and includes a state in which the two rotating elements are connected so as to rotate together or a state in which the two rotating elements are connected such that a driving force can be transmitted via one, two, or more transmission members. Such transmission members include various members that transmit rotation at the same speed or at a shifted speed, such as a shaft, a gear mechanism, a belt, and a chain. The transmission members may include an engagement device that selectively transmits rotation and a driving force, such as a friction engagement device and a meshing engagement device. When "drivingly connected" is used for rotating elements of the planetary gear mechanism P, it refers to a state in which the rotating elements are connected to each other via no other rotating elements.

In the following description, a direction along a first axis X1 that is an axis on which the planetary gear mechanism P is disposed will be referred to as "axial direction L." One side in the axial direction L will be referred to as "first axial side L1," and the other side in the axial direction L will be referred to as "second axial side L2." A direction perpendicular to each of multiple axes including the first axis X1 will be referred to as "radial direction R" with respect to that axis. When it is not necessary to distinguish the axis to be used as a reference, or when the axis to be used as a reference is clear, the direction may be simply referred to as "radial direction R."

The rotating electrical machine MG includes a stator ST and a rotor RT. The stator ST is fixed to a non-rotating member NR. In the present embodiment, the stator ST is fixed to the case CS that is the non-rotating member NR. The rotor RT is supported so as to be rotatable relative to the stator ST. In the present embodiment, the rotating electrical machine MG is disposed on the first axis X1. The rotating electrical machine MG is disposed to the first axial side L1 of the planetary gear mechanism P.

In the present application, the "rotating electrical machine" is used as a concept including any of a motor (electric motor), a generator (power generator), and a motor generator that functions as both a motor and a generator as needed.

The input member I is disposed on the first axis X1. In the present embodiment, the input member I is a rotor shaft 1 connected to the rotor RT so as to rotate with the rotor RT. The rotor shaft 1 is a shaft member formed so as to extend in the axial direction L. In the present embodiment, the rotor shaft 1 has a tubular shape with its axis on the first axis X1.

The planetary gear mechanism P includes a first rotating element E1, a second rotating element E2, and a third rotating element E3. The planetary gear mechanism P is configured such that the order of the rotational speeds of these rotating elements is the first rotating element E1, the second rotating element E2, and the third rotating element E3. The planetary gear mechanism P functions as a speed reducer that reduces the speed of rotation of the input member I and transmits the resultant rotation to the output member O.

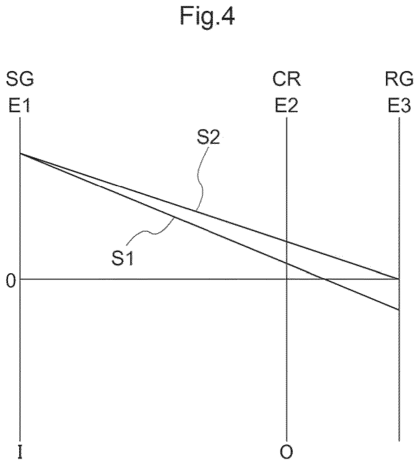

As used herein, the "order of the rotational speeds" means the order of the rotational speeds of the rotating elements in a rotating state. Although the rotational speeds of the rotating elements change depending on the rotating state of the planetary gear mechanism P, the order of the rotational speeds of the rotating elements does not change because it is determined by the structure of the planetary gear mechanism P. The order of the rotational speeds of the rotating elements is the same as the order of arrangement of the rotating elements in a velocity diagram (see FIG. 4). The "order of arrangement of the rotating elements in the velocity diagram" refers to the order in which the axes corresponding to the rotating elements are arranged along a direction perpendicular to the axes in the velocity diagram. Although the direction of arrangement of the axes corresponding to the rotating elements in the velocity diagram varies depending on how the velocity diagram is drawn, the order of arrangement of the axes does not change because it is determined by the structure of the planetary gear mechanism P.

The first rotating element E1 is connected to the input member I so as to rotate with the input member I. The second rotating element E2 is connected to the output member O so as to rotate with the output member O. In the present embodiment, the first rotating element E1 is a sun gear SG. The second rotating element E2 is a carrier CR. The third rotating element E3 is an internal ring gear RG.

In the present embodiment, the planetary gear mechanism P is a single-pinion planetary gear mechanism. Therefore, the pinion gear PG rotatably supported by the carrier CR meshes with both the sun gear SG and the ring gear RG. The pinion gear PG rotates (spins) on its own axis and also rotates (revolves) together with the carrier CR around the first axis X1. A plurality of the pinion gears PG is provided at intervals along their revolution trajectory.

In the present embodiment, the differential gear mechanism DF is disposed on the first axis X1. In the present embodiment, the differential gear mechanism DF is a bevel gear differential gear mechanism including a differential case 21, a pair of differential pinion gears 22, a first side gear 23, and a second side gear 24.

The differential case 21 houses the pair of differential pinion gears 22, the first side gear 23, and the second side gear 24. The differential case 21 is supported so as to be rotatable relative to the case CS. In the present embodiment, the differential case 21 is connected to the second rotating element E2 (in this example, the carrier CR) of the planetary gear mechanism P so as to rotate with the second rotating element E2. That is, in the present embodiment, the differential case 21 serves as the output member O.

The pair of differential pinion gears 22 is disposed so as to face each other in the radial direction R. The pair of pinion gears 22 is attached to a pinion shaft 22a supported so as to rotate with the differential case 21. The pair of pinion gears 22 is configured to rotate (spin) on the pinion shaft 22a and to rotate (revolve) around the rotation axis of the differential case 21 (in this example, the first axis X1).

The first side gear 23 and the second side gear 24 mesh with the pair of pinion gears 22. The first side gear 23 is disposed to the first axial side L1 of the pinion shaft 22a. The second side gear 24 is disposed to the second axial side L2 of the pinion shaft 22a.

In the present embodiment, the first side gear 23 is connected to a first wheel connecting shaft 25 so as to rotate with the first wheel connecting shaft 25. The first wheel connecting shaft 25 is a shaft member that rotates with the wheel W on the first axial side L1 via a drive shaft. The first wheel connecting shaft 25 is disposed so as to extend from the first side gear 23 toward the first axial side L1. In the present embodiment, the first wheel connecting shaft 25 is disposed on the first axis X1. The first wheel connecting shaft 25 is disposed inward of the rotor shaft 1 in the radial direction R so as to extend through the rotor shaft 1 in the axial direction L.

In the present embodiment, the second side gear 24 is connected to a second wheel connecting shaft 26 so as to rotate with the second wheel connecting shaft 26. The second wheel connecting shaft 26 is a shaft member that rotates with the wheel W on the second axial side L2 via a drive shaft. The second wheel connecting shaft 26 is disposed so as to extend from the second side gear 24 toward the second axial side L2. In the present embodiment, the second wheel connecting shaft 26 is disposed on the first axis X1.

A switching mechanism S includes a fourth rotating element E4, a fifth rotating element E5, a sixth rotating element E6, a first engagement mechanism 3, and a second engagement mechanism 4.

The fourth rotating element E4 is disposed on the first axis X1. The fourth rotating element E4 is connected to the first rotating element E1 or the second rotating element E2 of the planetary gear mechanism P so as to rotate with the first rotating element E1 or the second rotating element E2. In the present embodiment, the fourth rotating element E4 is connected to the first rotating element E1 so as to rotate with the first rotating element E1. In the present embodiment, the fourth rotating element E4 is a first gear G1. In the present embodiment, the first gear G1 is an external gear disposed adjacent to the sun gear SG that is the first rotating element E1 on the first axial side L1. In the example shown in FIG. 1, the first gear G1 and the sun gear SG are formed on the outer peripheral surface of the rotor shaft 1. The first gear G1 and the sun gear SG have the same diameter.

The fifth rotating element E5 is disposed on a second axis X2 that is an axis different from the first axis X1. The fifth rotating element E5 is configured to rotate in conjunction with the third rotating element E3 of the planetary gear mechanism P. Regarding two rotating elements, "rotate in conjunction with" includes both a configuration in which these rotating elements rotate at the same speed and a configuration in which these rotating elements rotate synchronously at a fixed speed ratio. In the present embodiment, the second axis X2 extends parallel to the first axis X1.

In the present embodiment, the fifth rotating element E5 is a second gear G2. The second gear G2 is configured to mesh with a fourth gear G4. The fourth gear G4 is an external gear that rotates with the ring gear RG that is the third rotating element E3. In the present embodiment, the fourth gear G4 is disposed outward of the ring gear RG in the radial direction R at such a position that the fourth gear G4 overlaps the ring gear RG as viewed radially in the radial direction R. The fourth gear G4 may be disposed at a position shifted in the axial direction L with respect to the ring gear RG. In this case, the fourth gear G4 may be disposed at such a position that the fourth gear G4 overlaps the ring gear RG as viewed axially in the axial direction L, or may be disposed inward of the ring gear RG in the radial direction R. Regarding the arrangement of two elements, "overlap as viewed in a specific direction" means that, when an imaginary straight line parallel to the direction of the line of sight is moved in directions perpendicular to the imaginary straight line, an area where the imaginary straight line intersects both of the two elements is present at least in part.

The sixth rotating element E6 is disposed on the second axis X2. The sixth rotating element E6 is configured to rotate in conjunction with the fourth rotating element E4. In the present embodiment, the sixth rotating element E6 is a third gear G3. The third gear G3 is configured to mesh with the first gear G1 or to mesh with a gear that meshes with the first gear G1. In the present embodiment, the third gear G3 meshes with a first idler gear IG1 that meshes with the first gear G1. That is, in the present embodiment, the third gear G3 and the first gear G1 mesh with the first idler gear IG1 at different circumferential positions of the first idler gear IG1. In the present embodiment, the third gear G3 is disposed adjacent to the second gear G2 on the first axial side L1.

The first engagement mechanism 3 is configured to connect and disconnect power transmission between the fifth rotating element E5 and the sixth rotating element E6. The second engagement mechanism 4 is configured to selectively fix the fifth rotating element E5 to the non-rotating member NR. In the present embodiment, the first engagement mechanism 3 and the second engagement mechanism 4 are disposed next to each other on the second axis X2. In the example shown in FIG. 1, the first engagement mechanism 3 is disposed adjacent to the second engagement mechanism 4 on the first axial side L1. In the present embodiment, the first engagement mechanism 3 and the second engagement mechanism 4 are disposed to the second axial side L2 of the second gear G2.

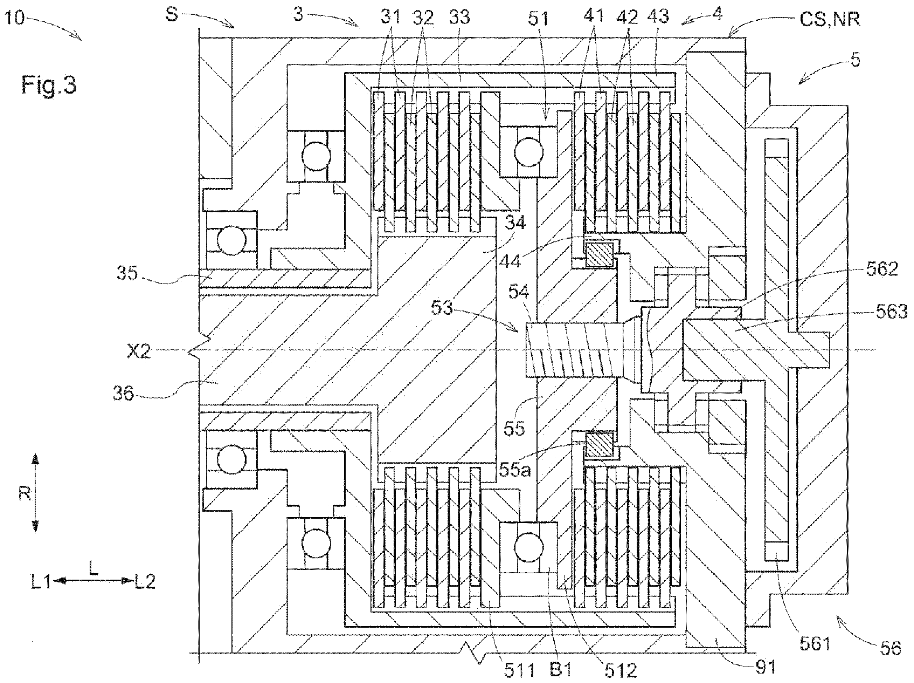

As shown in FIG. 3, the first engagement mechanism 3 includes a first engagement element 31 and a second engagement element 32 that are configured to engage with each other. The second engagement mechanism 4 includes a third engagement element 41 and a fourth engagement element 42 that are configured to engage with each other.

In the present embodiment, each of the first engagement mechanism 3 and the second engagement mechanism 4 is a friction engagement mechanism. The friction engagement mechanism is configured such that its engagement state (engaged state/disengaged state) is controlled according to the engagement pressure of the pair of engagement elements. The engaged state of the friction engagement mechanism includes a "directly engaged state" and a "slip-engaged state." The directly engaged state is a state in which the pair of engagement elements is engaged with each other without differential rotation. The slip-engaged state is a state in which the pair of engagement elements is engaged with each other with differential rotation.

In the present embodiment, the first engagement element 31 and the second engagement element 32 are disposed so as to face each other in the axial direction L. The first engagement element 31 and the second engagement element 32 frictionally engage with each other when pressed together in the axial direction L. A plurality of the first engagement elements 31 and a plurality of the second engagement elements 32 are provided, and these engagement elements are arranged alternately along the axial direction L.

In the present embodiment, the third engagement element 41 and the fourth engagement element 42 are disposed so as to face each other in the axial direction L. The third engagement element 41 and the fourth engagement element 42 frictionally engage with each other when pressed together in the axial direction L. A plurality of the third engagement elements 41 and a plurality of the fourth engagement elements 42 are provided, and these engagement elements are arranged alternately along the axial direction L.

In the present embodiment, the first engagement mechanism 3 further includes a first support member 33 that supports the first engagement elements 31, and a second support member 34 that supports the second engagement elements 32.

The first support member 33 supports the first engagement elements 31 such that the first support member 33 rotates with the first engagement elements 31 and such that the first engagement elements 31 are slidable in the axial direction L. In the present embodiment, the first support member 33 has a tubular shape with its axis on the second axis X2. The first support member 33 supports the first engagement elements 31 from outside in the radial direction R. In this example, a plurality of spline teeth extending in the axial direction L is formed on the inner periphery of the first support member 33 so as to be distributed in the circumferential direction. Similar spline teeth are formed on the outer periphery of each first engagement element 31 so as to be distributed in the circumferential direction. These spline teeth are engaged with each other.

The second support member 34 supports the second engagement elements 32 such that the second support member 34 rotates with the second engagement elements 32 and such that the second engagement elements 32 are slidable in the axial direction L. In the present embodiment, the second support member 34 is coaxial with the first support member 33 and has a tubular shape with a smaller diameter than the first support member 33. The second support member 34 supports the second engagement elements 32 from inside in the radial direction R. In this example, a plurality of spline teeth extending in the axial direction L is formed on the outer periphery of the second support member 34 so as to be distributed in the circumferential direction. Similar spline teeth are formed on the inner periphery of each second engagement element 32 so as to be distributed in the circumferential direction. These spline teeth are engaged with each other.

As shown in FIGS. 1 and 2, the first support member 33 is connected to the fifth rotating element E5 so as to rotate with the fifth rotating element E5. In the present embodiment, the first support member 33 is connected to the second gear G2 that is the fifth rotating element E5 via a first connecting shaft 35. The first connecting shaft 35 is a shaft member extending in the axial direction L. In the present embodiment, the first connecting shaft 35 has a tubular shape with its axis on the second axis X2.

The second support member 34 is connected to the sixth rotating element E6 so as to rotate with the sixth rotating element E6. In the present embodiment, the second support member 34 is connected to the third gear G3 that is the sixth rotating element E6 via a second connecting shaft 36. The second connecting shaft 36 is a shaft member extending in the axial direction L. In the present embodiment, the second connecting shaft 36 is disposed on the second axis X2. The second connecting shaft 36 is disposed inward of the first connecting shaft 35 in the radial direction R so as to extend through the first connecting shaft 35 in the axial direction L.

When the first engagement mechanism 3 is in the directly engaged state with the first engagement elements 31 engaged with the second engagement elements 32 without differential rotation, the fifth rotating element E5 and the sixth rotating element E6 rotate together. On the other hand, when the first engagement mechanism 3 is in the disengaged state with the first engagement elements 31 disengaged from the second engagement elements 32, or when the first engagement mechanism 3 is in the slip-engaged state with the first engagement elements 31 engaged with the second engagement elements 32 with differential rotation, the fifth rotating element E5 and the sixth rotating element E6 rotate relative to each other.

As shown in FIG. 3, in the present embodiment, the second engagement mechanism 4 further includes a third support member 43 that supports the third engagement elements 41, and a fourth support member 44 that supports the fourth engagement elements 42.

The third support member 43 supports the third engagement elements 41 such that the third support member 43 rotates with the third engagement elements 41 and such that the third engagement elements 41 are slidable in the axial direction L. In the present embodiment, the third support member 43 has a tubular shape with its axis on the second axis X2. The third support member 43 supports the third engagement elements 41 from outside in the radial direction R. In this example, a plurality of spline teeth extending in the axial direction L is formed on the inner periphery of the third support member 43 so as to be distributed in the circumferential direction. Similar spline teeth are formed on the outer periphery of each third engagement element 41 so as to be distributed in the circumferential direction. These spline teeth are engaged with each other.

The fourth support member 44 supports the fourth engagement elements 42 such that the fourth engagement elements 42 are not rotatable relative to the fourth support member 44 in the circumferential direction and are slidable in the axial direction L. In the present embodiment, the fourth support member 44 is coaxial with the third support member 43 and has a tubular shape with a smaller diameter than the third support member 43. The fourth support member 44 supports the fourth engagement elements 42 from inside in the radial direction R. In this example, a plurality of spline teeth extending in the axial direction L is formed on the outer periphery of the fourth support member 44 so as to be distributed in the circumferential direction. Similar spline teeth are formed on the inner periphery of each fourth engagement element 42 so as to be distributed in the circumferential direction. These spline teeth are engaged with each other.

The third support member 43 is connected to the fifth rotating element E5 so as to rotate with the fifth rotating element E5. In the present embodiment, the third support member 43 is connected to the first support member 33 so as to rotate with the first support member 33. Therefore, in the present embodiment, the third engagement elements 41 supported by the third support member 43 and the first engagement elements 31 supported by the first support member 33 rotate together.

The fourth support member 44 is fixed to the non-rotating member NR. In the present embodiment, the case CS that is the non-rotating member NR includes a first support wall 91 formed so as to extend in the radial direction R. The fourth support member 44 is fixed to the first support wall 91. In the example shown in FIG. 3, the first support wall 91 is disposed so as to cover the second engagement mechanism 4 from the second axial side L2. The fourth support member 44 is formed so as to protrude from the first support wall 91 towards the first axial side L1.

When the second engagement mechanism 4 is in the directly engaged state with the third engagement elements 41 engaged with the fourth engagement elements 42 without differential rotation, the fifth rotating element E5 is fixed to the non-rotating member NR. On the other hand, when the second engagement mechanism 4 is in the disengaged state with the third engagement elements 41 disengaged from the fourth engagement elements 42, or when the second engagement mechanism 4 is in the slip-engaged state with the third engagement elements 41 engaged with the fourth engagement elements 42 with differential rotation, the fifth rotating element E5 rotates relative to the non-rotating member NR.

In the vehicle transmission 10 configured as described above, when the first engagement mechanism 3 is in the engaged state (in this example, the directly engaged state) and the second engagement mechanism 4 is in the disengaged state, the fifth rotating element E5 and the sixth rotating element E6 rotate together, and a first shift speed S1 is formed in which rotation of the input member I is reduced in speed and transmitted to the output member O at a constant rotational speed ratio between the first rotating element E1 and the third rotating element E3. When the first engagement mechanism 3 is in the disengaged state and the second engagement mechanism 4 is in the engaged state (in this example, the directly engaged state), the fifth rotating element E5 is fixed to the non-rotating member NR, and a second shift speed S2 is formed in which rotation of the input member I is reduced in speed and transmitted to the output member O.

As described above, the vehicle transmission 10 is the vehicle transmission 10 including:
the input member I drivingly connected to the driving source (in this example, the rotating electrical machine MG);
the output member O drivingly connected to the wheel W;
the planetary gear mechanism P including the first rotating element E1, the second rotating element E2, and the third rotating element E3, and configured such that the order of the rotational speeds of these rotating elements are the first rotating element E1, the second rotating element E2, and the third rotating element E3; and
the switching mechanism S configured to switch the state of the planetary gear mechanism P.

The first rotating element E1 is connected to the input member I so as to rotate with the input member I.

The second rotating element E2 is connected to the output member O so as to rotate with the output member O.

The switching mechanism S includes
the fourth rotating element E4 disposed on the first axis X1 that is the axis on which the planetary gear mechanism P is disposed, and connected to the first rotating element E1 or the second rotating element E2 so as to rotate with the first rotating element E1 or the second rotating element E2,
the fifth rotating element E5 disposed on the second axis X2 that is an axis different from the first axis X1, and configured to rotate in conjunction with the third rotating element E3, the sixth rotating element E6 disposed on the second axis X2 and configured to rotate in conjunction with the fourth rotating element E4,
the first engagement mechanism 3 configured to connect and disconnect power transmission between the fifth rotating element E5 and the sixth rotating element E6, and
the second engagement mechanism 4 configured to selectively fix the fifth rotating element E5 to the non-rotating member NR.

With this configuration, when the first engagement mechanism 3 is switched to the engaged state and the second engagement mechanism 4 is switched to the disengaged state, the fifth rotating element E5 and the sixth rotating element E6 rotate together. The first shift speed S1 can thus be formed in which rotation of the input member I is reduced in speed and transmitted to the output member O at a constant rotational speed ratio between the first rotating element E1 and the third rotating element E3. When the first engagement mechanism 3 is switched to the disengaged state and the second engagement mechanism 4 is switched to the engaged state, the fifth rotating element E5 is fixed to the non-rotating member NR. The second shift speed S2 can thus be formed in which rotation of the input member I is reduced in speed and transmitted to the output member O.

In this configuration, the first rotating element E1 of the planetary gear mechanism P is connected to the input member I so as to rotate with the input member I, and the second rotating element E2 of the planetary gear mechanism P is connected to the output member O so as to rotate with the output member O. Therefore, the input member I and the output member O are disposed on the first axis X1. The fifth rotating element E5 and the sixth rotating element E6 of the switching mechanism S are disposed on the second axis X2. The first engagement mechanism 3 of the switching mechanism S is configured to connect and disconnect power transmission between the fifth rotating element E5 and the sixth rotating element E6, and the second engagement mechanism 4 of the switching mechanism S is configured to selectively fix the fifth rotating element E5 to the non-rotating member NR. As described above, with this configuration, the first shift speed S1 and the second shift speed S2 can be selectively formed by the input member I and the output member O that are disposed coaxially with the planetary gear mechanism P, and the switching mechanism S partially disposed on a different axis from the planetary gear mechanism P. This facilitates reduction in size of at least part of the vehicle transmission 10 in the radial direction R in the configuration including the planetary gear mechanism P and the switching mechanism S configured to switch the state of the planetary gear mechanism P.

As described above, in the present embodiment, the first rotating element E1 is the sun gear SG,
the second rotating element E2 is the carrier CR, and
the third rotating element E3 is the internal ring gear RG.

The switching mechanism S includes
the first gear G1 that is the fourth rotating element E4,
the second gear G2 that is the fifth rotating element E5,
the third gear G3 that is the sixth rotating element E6, and
the fourth gear G4 that is an external gear configured to rotate with the ring gear RG.

The second gear G2 is configured to mesh with the fourth gear G4.

The third gear G3 is configured to mesh with the first gear G1 or to mesh with a gear configured to mesh with the first gear G1 (in this example, the first idler gear IG1).

With this configuration, the vehicle transmission 10 with a small dimension in the radial direction R can be implemented with a simple configuration.

As shown in FIG. 4, in the present embodiment, a power transmission path between the third rotating element E3 and the fifth rotating element E5 that rotates in conjunction with the third rotating element E3 and a power transmission path between the fourth rotating element E4 connected to the first rotating element E1 so as to rotate with the first rotating element E1 and the sixth rotating element E6 that rotates in conjunction with the fourth rotating element E4 are provided such that the third rotating element E3 rotates in the opposite direction to the first rotating element E1 when the first engagement mechanism 3 is in the engaged state and the second engagement mechanism 4 is in the disengaged state (i.e., the first shift speed S1 is formed) and the input member I is rotating. To explain further, the gear ratio relationship between the power transmission path between the third rotating element E3 and the fifth rotating element E5 and the power transmission path between the fourth rotating element E4 and the sixth rotating element E6 is set such that the third rotating element E3 rotates in the opposite direction to the first rotating element E1 when the input member I is rotating.

With this configuration, the speed ratio of the first shift speed S1 that is formed when the first engagement mechanism 3 is switched to the engaged state and the second engagement mechanism 4 is switched to the disengaged state is higher than the speed ratio of the second shift speed S2 that is formed when the first engagement mechanism 3 is switched to the disengaged state and the second engagement mechanism 4 is switched to the engaged state. With this configuration, the planetary gear mechanism P is configured such that the number of rotating elements needed to provide the power transmission paths is smaller for the second shift speed S2 than for the first shift speed S1. Therefore, the transmission efficiency of the driving force is higher at the second shift speed S2 that is more frequently used for traveling at high speeds than the first shift speed S1. This configuration facilitates improvement in energy efficiency for traveling of the vehicle.

FIG. 4 is a velocity diagram of the planetary gear mechanism P according to the present embodiment. In the velocity diagram of FIG. 4, the vertical lines correspond to the rotational speeds of the rotating elements of the planetary gear mechanism P. Each of the vertical lines arranged in parallel represents a corresponding one of the rotating elements of the planetary gear mechanism P. In the velocity diagram of FIG. 4, the sings shown above the plurality of vertical lines are the signs of the corresponding rotating elements of the planetary gear mechanism P. Each of the signs shown below some of the vertical lines is the sign of the element that rotates with the rotating element denoted by the sign shown above the same vertical line.

As shown in FIG. 3, in the present embodiment, the switching mechanism S further includes a first drive mechanism 5. The first drive mechanism 5 is configured to drive both the first engagement mechanism 3 and the second engagement mechanism 4. In other words, the first engagement mechanism 3 and the second engagement mechanism 4 are driven by the common first drive mechanism 5. The first drive mechanism 5 includes a first engagement member 51, a first drive motor 52, and a first linear motion conversion mechanism 53.

The first engagement member 51 is an "engagement member" that operates to selectively switch either the first engagement mechanism 3 or the second engagement mechanism 4 to the engaged state. The first drive motor 52 is a "drive motor" that outputs a predetermined rotational driving force. The first linear motion conversion mechanism 53 is a screw "linear motion conversion mechanism" that converts the rotational driving force of the first drive motor 52 to a driving force in a direction along the second axis X2 (in this example, the axial direction L) and transmits the driving force to the first engagement member 51.

In the present embodiment, the first engagement member 51 includes a first pressing portion 511 and a second pressing portion 512.

The first pressing portion 511 is configured to press the first engagement elements 31 and the second engagement elements 32 of the first engagement mechanism 3 in the axial direction L. In the present embodiment, the first pressing portion 511 is formed so as to extend in the radial direction R. The first pressing portion 511 is disposed so as to press the first engagement elements 31 and the second engagement elements 32 from the second axial side L2. In the present embodiment, the first pressing portion 511 is supported so as to be movable relative to the first support member 33 of the first engagement mechanism 3 in the axial direction L and so as not to be rotatable relative to the first support member 33 in the circumferential direction.

The second pressing portion 512 is configured to press the third engagement elements 41 and the fourth engagement elements 42 of the second engagement mechanism 4 in the axial direction L. In the present embodiment, the second pressing portion 512 is formed so as to extend in the radial direction R. The second pressing portion 512 is disposed so as to press the third engagement elements 41 and the fourth engagement elements 42 from the first axial side L1. In the present embodiment, the second pressing portion 512 is a separate member from the first pressing portion 511 and is disposed so as to face the first pressing portion 511 in the axial direction L. The second pressing portion 512 is supported so as to be rotatable relative to the first pressing portion 511 via a thrust bearing B1. Therefore, in the present embodiment, the first pressing portion 511 and the second pressing portion 512 are configured to move in conjunction with each other in the axial direction L in such a manner that the first pressing portion 511 and the second pressing portion 512 are rotatable relative to each other.

In the present embodiment, the first linear motion conversion mechanism 53 includes a first threaded shaft 54, a first nut member 55, and a first transmission mechanism 56.

The first threaded shaft 54 is supported so as to be rotatable relative to the non-rotating member NR. The first threaded shaft 54 has threads on its outer periphery. The first threaded shaft 54 is formed so as to extend in the axial direction L. In the present embodiment, the first threaded shaft 54 is disposed on the second axis X2. In the present embodiment, the first threaded shaft 54 is disposed inward of the fourth support member 44 of the second engagement mechanism 4 in the radial direction R at such a position that the first threaded shaft 54 overlaps the fourth support member 44 as viewed radially in the radial direction R.

The first nut member 55 is configured to screw on the first threaded shaft 54. That is, the first nut member 55 has, in its outer periphery, grooves that engage with the threads of the first threaded shaft 54. The first nut member 55 is supported so as to be movable relative to the non-rotating member NR in the axial direction L and so as not to be rotatable relative to the non-rotating member NR in the circumferential direction. In the present embodiment, the first nut member 55 is disposed inward of the fourth support member 44 in the radial direction R. The first nut member 55 is connected to the fourth support member 44 such that the first nut member 55 is allowed to move relative to the case CS, namely the non-rotating member NR, in the axial direction L but not allowed to rotate relative to the case CS by a first connecting member 55a disposed between the outer periphery of the first nut member 55 and the inner periphery of the fourth support member 44 in the radial direction R. Therefore, as the first threaded shaft 54 rotates, the first nut member 55 makes linear motion in the axial direction L according to the direction of the rotation and the orientation of the threads of the first threaded shaft 54.

In the present embodiment, the first nut member 55 is connected to the second pressing portion 512 of the first engagement member 51 so as to move with the second pressing portion 512 in the axial direction L. In the example shown in FIG. 3, the first nut member 55 and the second pressing portion 512 are provided as a single-piece member formed such that the second pressing portion 512 extends outward in the radial direction R from the first nut member 55.

The first transmission mechanism 56 is configured to transmit the rotational driving force of the first drive motor 52 to the first threaded shaft 54. In the present embodiment, the first transmission mechanism 56 reduces the speed of rotation of the first drive motor 52 and transmits the resultant rotation to the first threaded shaft 54. In the present embodiment, the first transmission mechanism 56 includes a first transmission gear 561 and a first connector 562.

The first transmission gear 561 is drivingly connected to the first drive motor 52 via at least one gear (not shown). In the present embodiment, the first transmission gear 561 is disposed on the second axis X2. The first transmission gear 561 is connected to the first connector 562 via a first shaft 563 so as to rotate with the first connector 562. The first shaft 563 is in the form of a shaft extending in the axial direction L. In the present embodiment, the first shaft 563 is formed so as to extend from the first transmission gear 561 toward the first axial side L1.

The first connector 562 connects the first transmission gear 561 and the first threaded shaft 54 such that the first transmission gear 561 and the first threaded shaft 54 rotate together. In the present embodiment, the first connector 562 is connected to the first threaded shaft 54 such that the first threaded shaft 54 protrudes from the first connector 562 toward the first axial side L1 and such that the first connector 562 rotates with the first threaded shaft 54. In the present embodiment, the first connector 562 has a tubular shape that is open on the second axial side L2. The first connector 562 is connected to the first shaft 563 such that the first shaft 563 is disposed inward of the first connector 562 in the radial direction R and such that the first connector 562 rotates with the first shaft 563.

In the present embodiment, when the first drive motor 52 is driven to rotate toward a first side, the rotational driving force of the first drive motor 52 is transmitted to the first threaded shaft 54 via the first transmission mechanism 56, and the first nut member 55 moves toward the first axial side L1. As described above, in the present embodiment, the thrust bearing B1 is disposed between the first pressing portion 511 and the second pressing portion 512 in the axial direction L. Therefore, in the present embodiment, when the first nut member 55 moves toward the first axial side L1, the second pressing portion 512 moves toward the first axial side L1 via the first nut member 55, and the first pressing portion 511 also moves toward the first axial side L1 via the thrust bearing B1. As a result, the first engagement elements 31 and the second engagement elements 32 are pressed by the first pressing portion 511, and the first engagement mechanism 3 is switched to the engaged state. At the same time, the third engagement elements 41 and the fourth engagement elements 42 are no longer pressed by the second pressing portion 512, and the second engagement mechanism 4 is switched to the disengaged state.

On the other hand, when the first drive motor 52 is driven to rotate toward a second side opposite to the first side, the rotational driving force of the first drive motor 52 is transmitted to the first threaded shaft 54 via the first transmission mechanism 56, and the first nut member 55 moves toward the second axial side L2. Therefore, the second pressing portion 512 moves toward the second axial side L2 via the first nut member 55. As a result, the third engagement elements 41 and the fourth engagement elements 42 are pressed by the second pressing portion 512, and the second engagement mechanism 4 is switched to the engaged state. At the same time, the first engagement elements 31 and the second engagement elements 32 are no longer pressed by the first pressing portion 511, and the first engagement mechanism 3 is switched to the disengaged state.

As described above, in the present embodiment, the first engagement mechanism 3 and the second engagement mechanism 4 are disposed next to each other on the second axis X2 and are driven by the common first drive mechanism 5.

The first drive mechanism 5 includes: the first engagement member 51 that operates to selectively switch either the first engagement mechanism 3 or the second engagement mechanism 4 to the engaged state; the first drive motor 52; and the first linear motion conversion mechanism 53, namely a screw linear motion conversion mechanism, that converts the rotational driving force of the first drive motor 52 to a driving force in a direction along the second axis X2 (in this example, the axial direction L) and transmits the driving force to the first engagement member 51.

When the first drive motor 52 is driven to rotate toward the first side, the first engagement mechanism 3 is switched to the engaged state and the second engagement mechanism 4 is switched to the disengaged state.

When the first drive motor 52 is driven to rotate toward the second side opposite to the first side, the second engagement mechanism 4 is switched to the engaged state and the first engagement mechanism 3 is switched to the disengaged state.

In this configuration, the first drive mechanism 5 that drives the first engagement mechanism 3 and the second engagement mechanism 4 includes the first drive motor 52 and the first linear motion conversion mechanism 53 that is a screw linear motion conversion mechanism. This facilitates reduction in size of the vehicle transmission 10 compared to a case where a hydraulic drive mechanism is used.

### 2. Second Embodiment

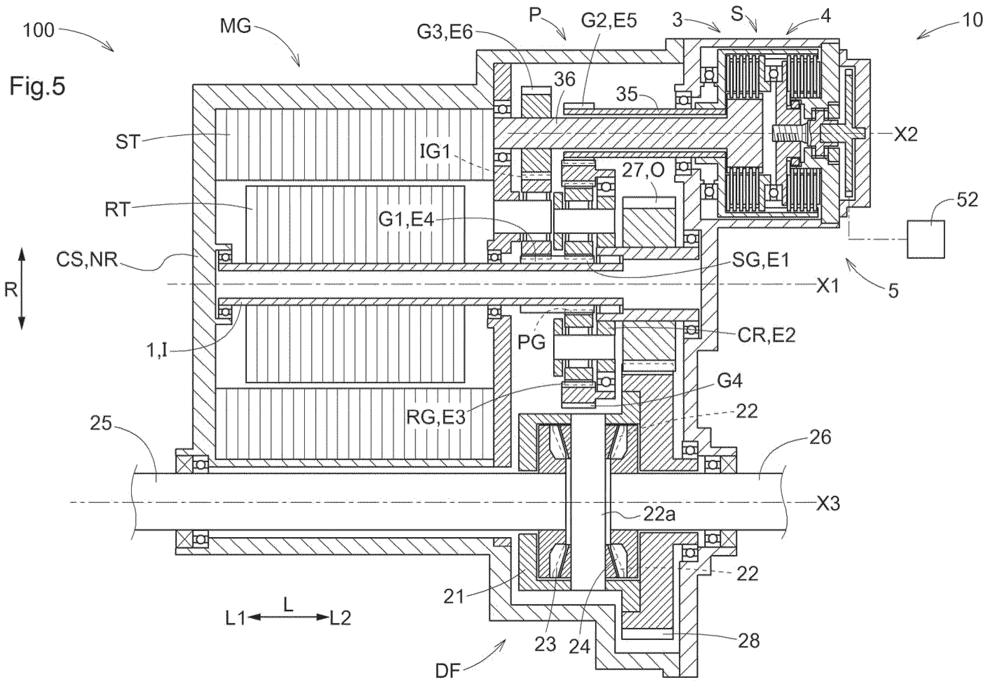

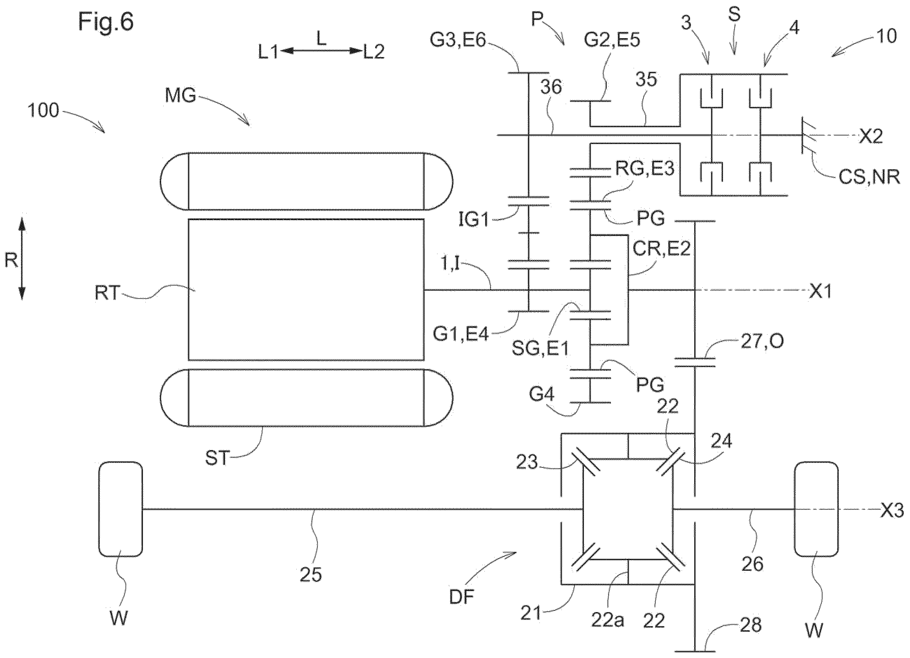

Hereinafter, the vehicle transmission 10 according to a second embodiment will be described with reference to FIGS. 5 and 6. The present embodiment is different from the first embodiment in the position of the differential gear mechanism DF. The following description focuses on the differences from the first embodiment. The present embodiment is the same as the first embodiment in terms of points that are not particularly described below.

As shown in FIGS. 5 and 6, in the present embodiment, the differential gear mechanism DF is disposed on a third axis X3 that is an axis different from the first axis X1 and the second axis X2. The differential gear mechanism DF includes a differential input gear 28, and distributes rotation of the differential input gear 28 to the pair of wheels W (see FIG. 6). The differential input gear 28 is connected to the differential case 21 so as to rotate with the differential case 21. The differential input gear 28 is formed so as to protrude outward in the radial direction R beyond the differential case 21. In the present embodiment, the differential input gear 28 meshes with an output gear 27 disposed on the first axis X1. In this example, the third axis X3 extends parallel to the first axis X1.

The output gear 27 is connected to the second rotating element E2 (in this example, the carrier CR) of the planetary gear mechanism P so as to rotate with the second rotating element E2. Therefore, in the present embodiment, the output gear 27 serves as the output member O. In the present embodiment, the output gear 27 is disposed adjacent to the planetary gear mechanism P on the second axial side L2.

In the present embodiment, the first wheel connecting shaft 25 is not disposed inward of the rotor shaft 1 in the radial direction R, but is disposed in a region outward of the rotating electrical machine MG in the radial direction R. This can reduce the dimension of the rotor shaft 1 in the radial direction R, and can therefore reduce the outer diameter of the sun gear SG provided on the rotor shaft 1. It is therefore easy to ensure that the planetary gear mechanism P has a high reduction ratio.

### 3. Third Embodiment

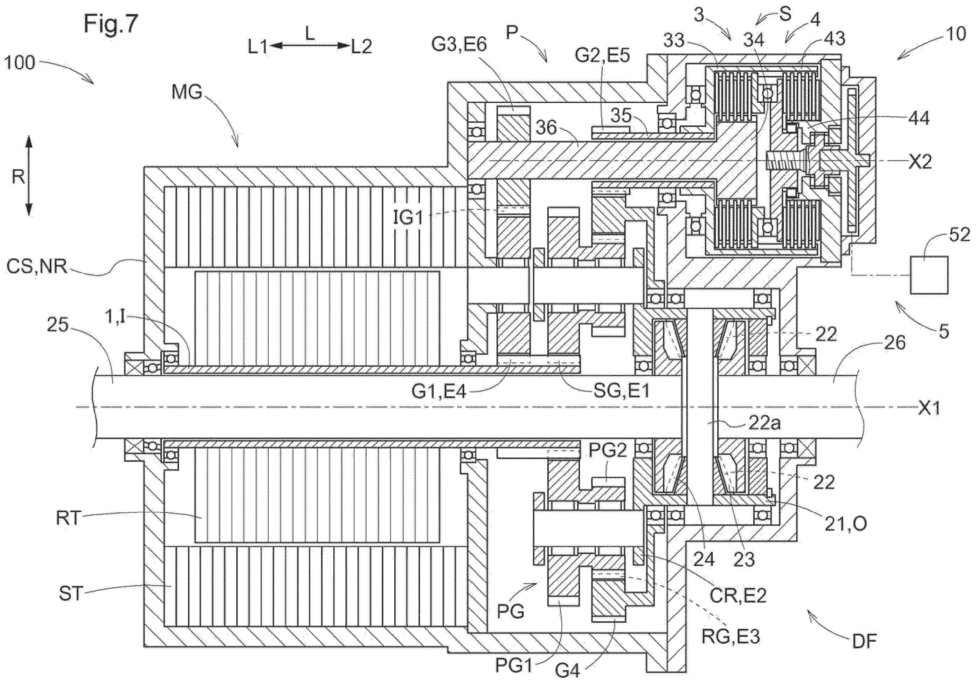

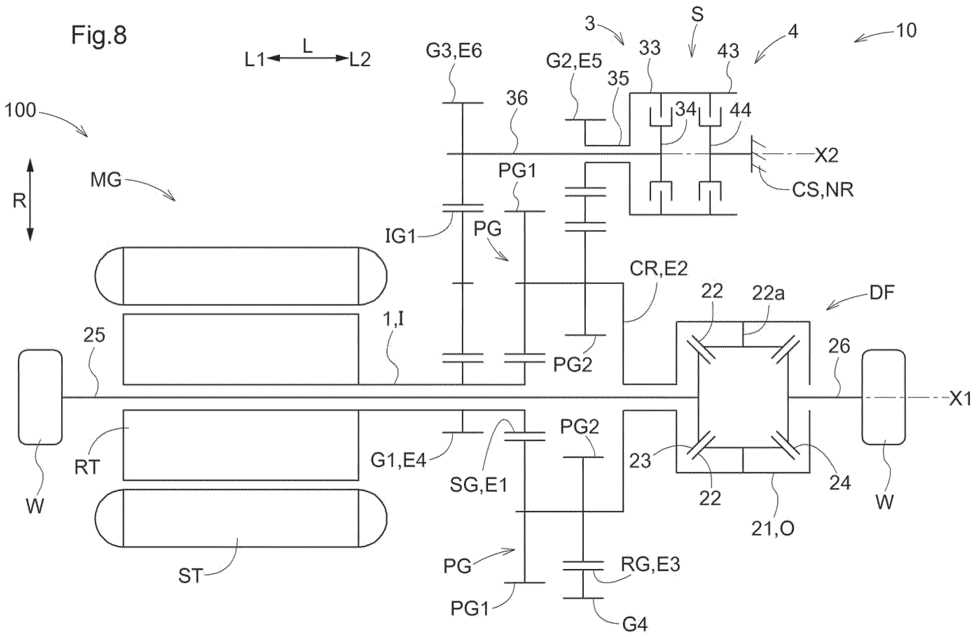

Hereinafter, the vehicle transmission 10 according to a third embodiment will be described with reference to FIGS. 7 and 8. The present embodiment is different from the first embodiment in the configuration of the planetary gear mechanism P. The following description focuses on the differences from the first embodiment. The present embodiment is the same as the first embodiment in terms of points that are not particularly described below.

As shown in FIGS. 7 and 8, in the present embodiment, the pinion gear PG of the planetary gear mechanism P includes a first gear portion PG1 that meshes with the sun gear SG, and a second gear portion PG2 that meshes with the ring gear RG.

The first gear portion PG1 and the second gear portion PG2 are connected to each other so as to rotate together. In the present embodiment, the first gear portion PG1 has a larger diameter than the second gear portion PG2. The first gear portion PG1 is disposed on the first axial side L1 of the second gear portion PG2.

### 4. Fourth Embodiment

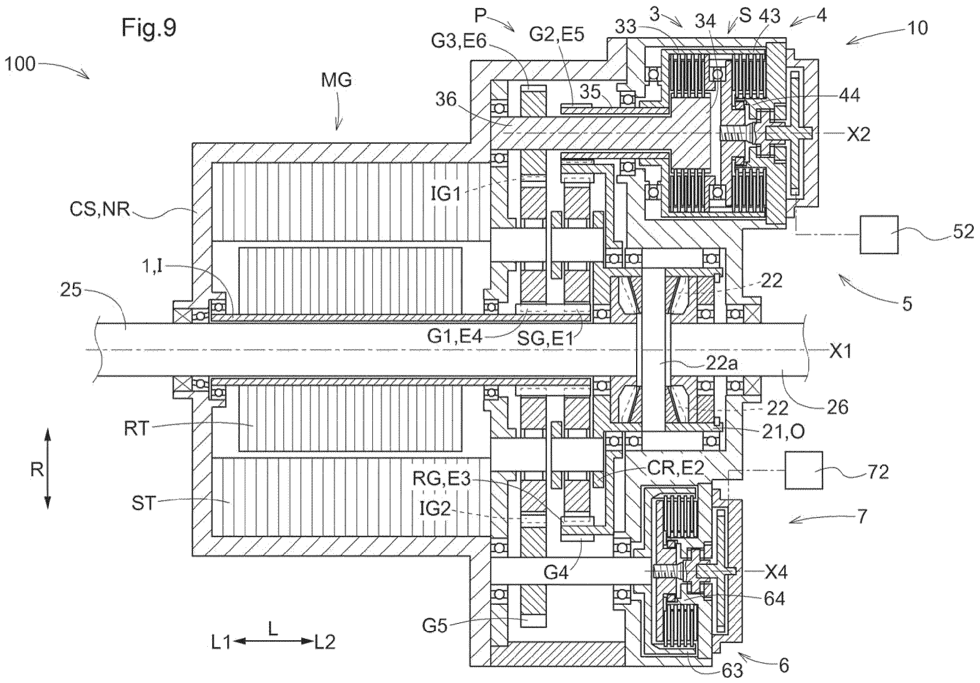

Hereinafter, the vehicle transmission 10 according to a fourth embodiment will be described with reference to FIGS. 9 to 11. The present embodiment is different from the first embodiment in the configuration of the switching mechanism S. The following description focuses on the differences from the first embodiment. The present embodiment is the same as the first embodiment in terms of points that are not particularly described below.

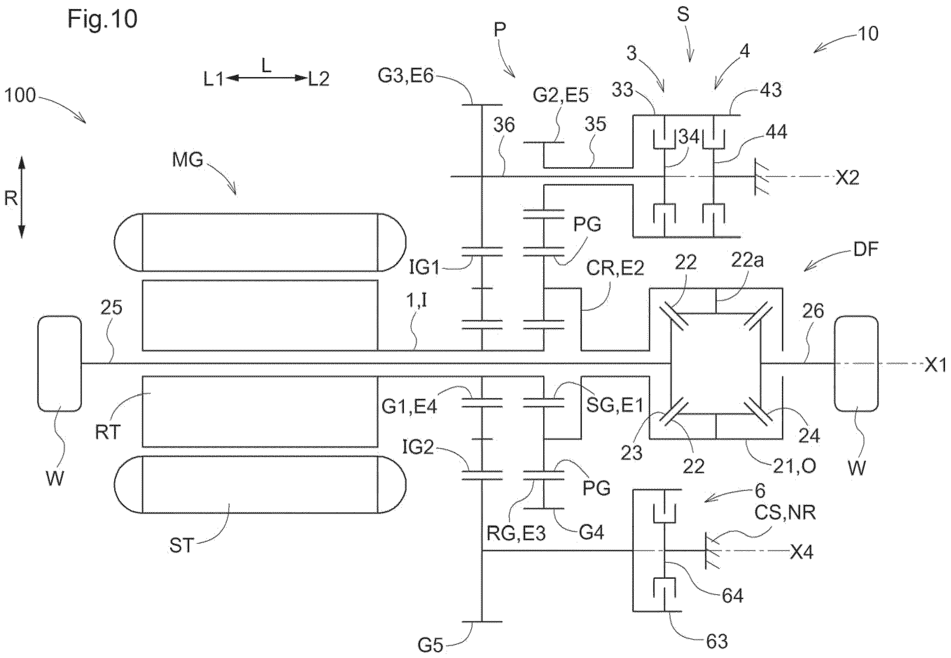

As shown in FIGS. 9 and 10, in the present embodiment, the switching mechanism S further includes a third engagement mechanism 6, namely a friction engagement mechanism, that selectively fixes the fourth rotating element E4 to the non-rotating member NR.

With this configuration, even when the shift speed is to be shifted (upshifted) from a shift speed with a high speed ratio to a shift speed with a low speed ratio at which the rotational speed of the input member I for the same vehicle speed is low, but the driving source (in this example, the rotating electrical machine MG) is not able to output negative torque, the rotational speed of the input member I can be reduced by switching the third engagement mechanism 6 to the slip-engaged state. The shifting can thus be quickly performed.

Moreover, with this configuration, either the first engagement mechanism 3 or the second engagement mechanism 4 and the third engagement mechanism 6 can be engaged with each other to serve as a parking brake.

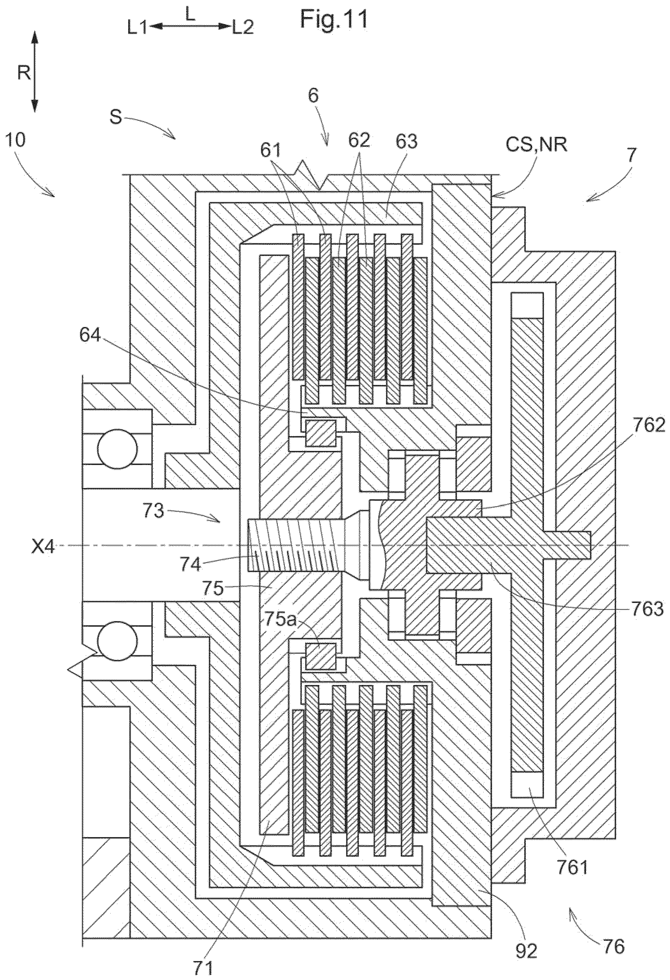

As shown in FIG. 11, the third engagement mechanism 6 includes a fifth engagement element 61 and a sixth engagement element 62 that are configured to engage with each other. In the present embodiment, the fifth engagement element 61 and the sixth engagement element 62 are disposed so as to face each other in the axial direction L. The fifth engagement element 61 and the sixth engagement element 62 frictionally engage with each other when pressed together in the axial direction L. A plurality of the fifth engagement elements 61 and a plurality of the sixth engagement elements 62 are provided, and these engagement elements are arranged alternately along the axial direction L.

In the present embodiment, the third engagement mechanism 6 is disposed on a fourth axis X4 that is an axis different from the first axis X1 to the third axis X3. In the present embodiment, the third engagement mechanism 6 further includes a fifth support member 63 that supports the fifth engagement elements 61, and a sixth support member 64 that supports the sixth engagement elements 62. In this example, the fourth axis X4 extends parallel to the first axis X1.

The fifth support member 63 supports the fifth engagement elements 61 such that the fifth support member 63 rotates with the fifth engagement elements 61 and such that the fifth engagement elements 61 are slidable in the axial direction L. In the present embodiment, the fifth support member 63 has a tubular shape with its axis on the fourth axis X4. The fifth support member 63 supports the fifth engagement elements 61 from outside in the radial direction R. In this example, a plurality of spline teeth extending in the axial direction L is formed on the inner periphery of the fifth support member 63 so as to be distributed in the circumferential direction. Similar spline teeth are formed on the outer periphery of each fifth engagement element 61 so as to be distributed in the circumferential direction. These spline teeth are engaged with each other.

The sixth support member 64 supports the sixth engagement elements 62 such that the sixth support member 64 rotates with the sixth engagement elements 62 and such that the sixth engagement elements 62 are slidable in the axial direction L. In the present embodiment, the sixth support member 64 is coaxial with the fifth support member 63 and has a tubular shape with a smaller diameter than the fifth support member 63. The sixth support member 64 supports the sixth engagement elements 62 from inside in the radial direction R. In this example, a plurality of spline teeth extending in the axial direction L is formed on the outer periphery of the sixth support member 64 so as to be distributed in the circumferential direction. Similar spline teeth are formed on the inner periphery of each sixth engagement element 62 so as to be distributed in the circumferential direction. These spline teeth are engaged with each other.

As shown in FIGS. 9 and 10, the fifth support member 63 is connected to a fifth gear G5 so as to rotate with the fifth gear G5. The fifth gear G5 meshes with a second idler gear IG2 that meshes with the first gear G1 that is the fourth rotating element E4 connected to the first rotating element E1 of the planetary gear mechanism P so as to rotate with the first rotating element E1. That is, the fifth gear G5 and the first gear G1 mesh with the second idler gear IG2 at different circumferential positions of the second idler gear IG2. The first idler gear IG1 and the second idler gear IG2 mesh with the first gear G1 at different circumferential positions of the first gear G1. Therefore, the fifth gear G5 rotates in conjunction with the first rotating element E1 (in this case, the sun gear SG) of the planetary gear mechanism P.

In the present embodiment, the fifth gear G5 is disposed on the fourth axis X4. The fifth gear G5 is disposed on the first axial side L1 of the third engagement mechanism 6.

As shown in FIG. 11, the sixth support member 64 is fixed to the non-rotating member NR. In the present embodiment, the case CS that is the non-rotating member NR includes a second support wall 92 formed so as to extend in the radial direction R. The sixth support member 64 is fixed to the second support wall 92. In the example shown in FIG. 11, the second support wall 92 is disposed so as to cover the third engagement mechanism 6 from the second axial side L2. The sixth support member 64 is formed so as to protrude from the second support wall 92 towards the first axial side L1.

When the third engagement mechanism 6 is in the directly engaged state with the fifth engagement elements 61 engaged with the sixth engagement elements 62 without differential rotation, the fifth gear G5 is fixed to the non-rotating member NR. As a result, the first rotating element E1 that rotates in conjunction with the fifth gear G5 is fixed to the non-rotating member NR. On the other hand, when the third engagement mechanism 6 is in the disengaged state with the fifth engagement elements 61 disengaged from the sixth engagement elements 62, or when the third engagement mechanism 6 is in the slip-engaged state with the fifth engagement elements 61 engaged with the sixth engagement elements 62 with differential rotation, the first rotating element E1 rotates relative to the non-rotating member NR.

As shown in FIG. 11, in the present embodiment, the switching mechanism S further includes a second drive mechanism 7 that drives the third engagement mechanism 6. The second drive mechanism 7 includes a second engagement member 71, a second drive motor 72, and a second linear motion conversion mechanism 73.

The second engagement member 71 is configured to switch the engagement state of the third engagement mechanism 6. The second drive motor 72 is configured to output a predetermined rotational driving force. The second linear motion conversion mechanism 73 is a screw "linear motion conversion mechanism" that converts the rotational driving force of the second drive motor 72 to a driving force in a direction along the fourth axis X4 (in this example, the axial direction L) and transmits the driving force to the second engagement member 71.

In the present embodiment, the second engagement member 71 is configured to press the fifth engagement elements 61 and the sixth engagement elements 62 in the axial direction L. In the present embodiment, the second engagement member 71 is formed so as to extend in the radial direction R. The second engagement member 71 is disposed so as to press the fifth engagement elements 61 and the sixth engagement elements 62 from the first axial side L1.

In the present embodiment, the second linear motion conversion mechanism 73 includes a second threaded shaft 74, a second nut member 75, and a second transmission mechanism 76.

The second threaded shaft 74 is supported so as to be rotatable relative to the non-rotating member NR. The second threaded shaft 74 has threads on its outer periphery. The second threaded shaft 74 is formed so as to extend in the axial direction L. In the present embodiment, the second threaded shaft 74 is disposed on the fourth axis X4. In the present embodiment, the second threaded shaft 74 is disposed inward of the sixth support member 64 of the third engagement mechanism 6 in the radial direction R at such a position that the second threaded shaft 74 overlaps the sixth support member 64 as viewed radially in the radial direction R.

The second nut member 75 is configured to screw on the second threaded shaft 74. That is, the second nut member 75 has, in its outer periphery, grooves that engage with the threads of the second threaded shaft 74. The second nut member 75 is supported so as to be movable relative to the non-rotating member NR in the axial direction L and so as not to be rotatable relative to the non-rotating member NR in the circumferential direction. In the present embodiment, the second nut member 75 is disposed inward of the sixth support member 64 in the radial direction R. The second nut member 75 is connected to the sixth support member 64 such that the second nut member 75 is allowed to move relative to the case CS, namely the non-rotating member NR, in the axial direction L but not allowed to rotate relative to the case CS by a second connecting member 75a disposed between the outer periphery of the second nut member 75 and the inner periphery of the sixth support member 64 in the radial direction R. Therefore, as the second threaded shaft 74 rotates, the second nut member 75 makes linear motion in the axial direction L according to the direction of the rotation and the orientation of the threads of the second threaded shaft 74.

In the present embodiment, the second nut member 75 is connected to the second engagement member 71 so as to move with the second engagement member 71 in the axial direction L. In the example shown in FIG. 11, the second nut member 75 and the second engagement member 71 are provided as a single-piece member formed such that the second engagement member 71 extends outward in the radial direction R from the second nut member 75.

The second transmission mechanism 76 is configured to transmit the rotational driving force of the second drive motor 72 to the second threaded shaft 74. In the present embodiment, the second transmission mechanism 76 reduces the speed of rotation of the second drive motor 72 and transmits the resultant rotation to the second threaded shaft 74. In the present embodiment, the second transmission mechanism 76 includes a second transmission gear 761 and a second connector 762.

The second transmission gear 761 is drivingly connected to the second drive motor 72 via at least one gear (not shown). In the present embodiment, the second transmission gear 761 is disposed on the fourth axis X4. The second transmission gear 761 is connected to the second connector 762 via a second shaft 763 so as to rotate with the second connector 762. The second shaft 763 is in the form of a shaft extending in the axial direction L. In the present embodiment, the second shaft 763 is formed so as to extend from the second transmission gear 761 toward the first axial side L1.

The second connector 762 connects the second transmission gear 761 and the second threaded shaft 74 such that the second transmission gear 761 and the second threaded shaft 74 rotate together. In the present embodiment, the second connector 762 is connected to the second threaded shaft 74 such that the second threaded shaft 74 protrudes from the second connector 762 toward the first axial side L1 and such that the second connector 762 rotates with the second threaded shaft 74. In the present embodiment, the second connector 762 has a tubular shape that is open on the second axial side L2. The second connector 762 is connected to the second shaft 763 such that the second shaft 763 is disposed inward of the second connector 762 in the radial direction R and such that the second connector 762 rotates with the second shaft 763.

In the present embodiment, when the second drive motor 72 is driven to rotate toward the first side, the rotational driving force of the second drive motor 72 is transmitted to the second threaded shaft 74 via the second transmission mechanism 76, and the second nut member 75 moves toward the first axial side L1. Therefore, the second engagement member 71 moves toward the first axial side L1 via the second nut member 75. As a result, the fifth engagement elements 61 and the sixth engagement elements 62 are no longer pressed by the second engagement member 71, and the third engagement mechanism 6 is switched to the disengaged state.

On the other hand, when the second drive motor 72 is driven to rotate toward the second side opposite to the first side, the rotational driving force of the second drive motor 72 is transmitted to the second threaded shaft 74 via the second transmission mechanism 76, and the second nut member 75 moves toward the second axial side L2. Therefore, the second engagement member 71 moves toward the second axial side L2 via the second nut member 75. As a result, the fifth engagement elements 61 and the sixth engagement elements 62 are pressed by the second engagement member 71, and the third engagement mechanism 6 is switched to the engaged state.

### 5. Fifth Embodiment

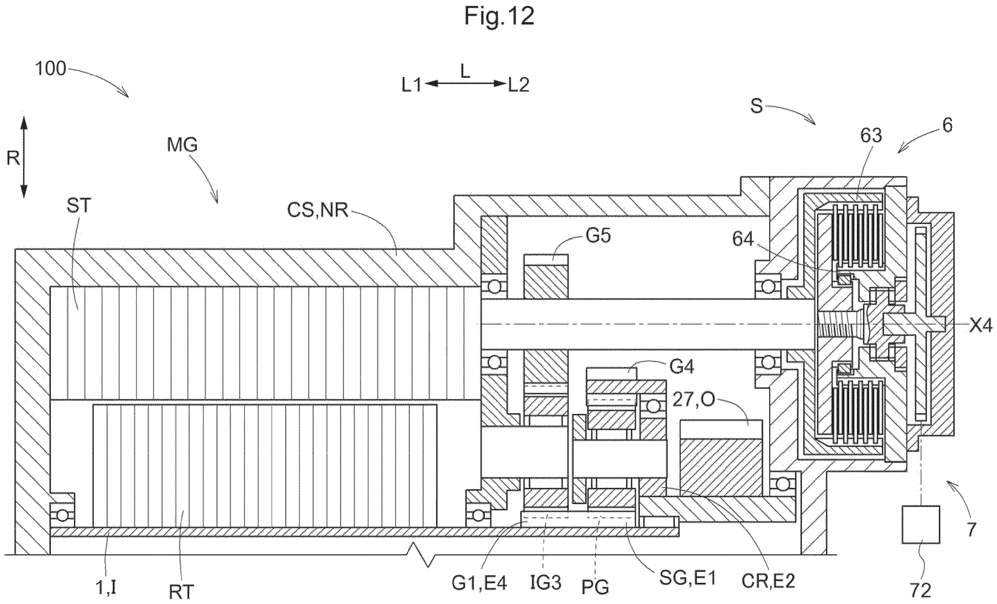

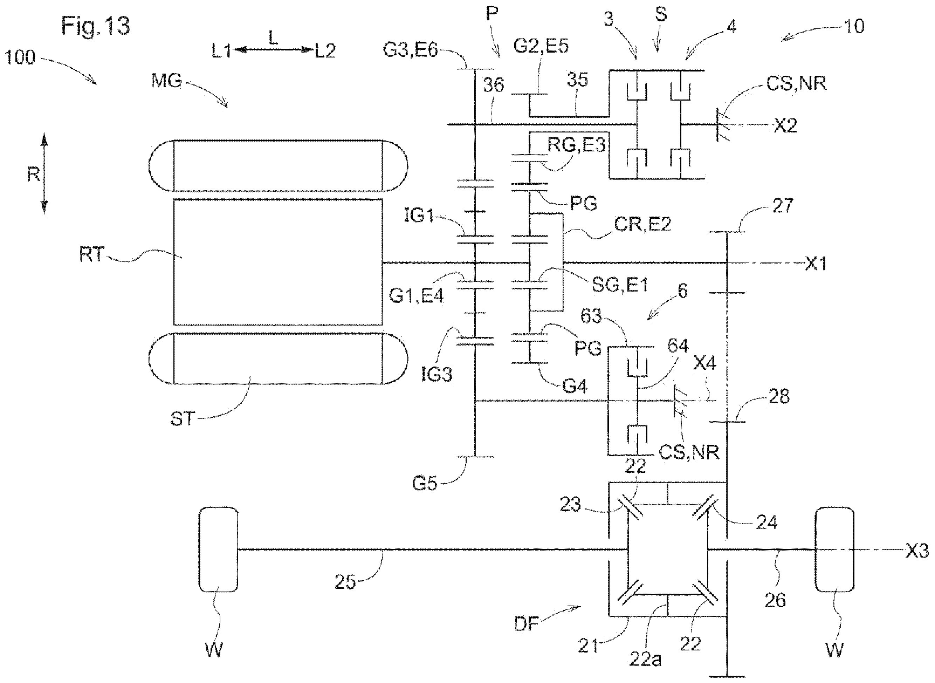

Hereinafter, the vehicle transmission 10 according to a fifth embodiment will be described with reference to FIGS. 12 and 13. The vehicle transmission 10 according to the present embodiment is different from the vehicle transmission 10 according to the second embodiment in that the vehicle transmission 10 according to the present embodiment includes the third engagement mechanism 6 of the fourth embodiment. The following description focuses on the differences from the second embodiment. The present embodiment is the same as the second embodiment in terms of points that are not particularly described below.

As shown in FIGS. 12 and 13, in the present embodiment, the fifth gear G5 meshes with a third idler gear IG3 that meshes with the first gear G1. That is, the fifth gear G5 and the first gear G1 mesh with the third idler gear IG3 at different circumferential positions of the third idler gear IG3.

### 6. Sixth Embodiment

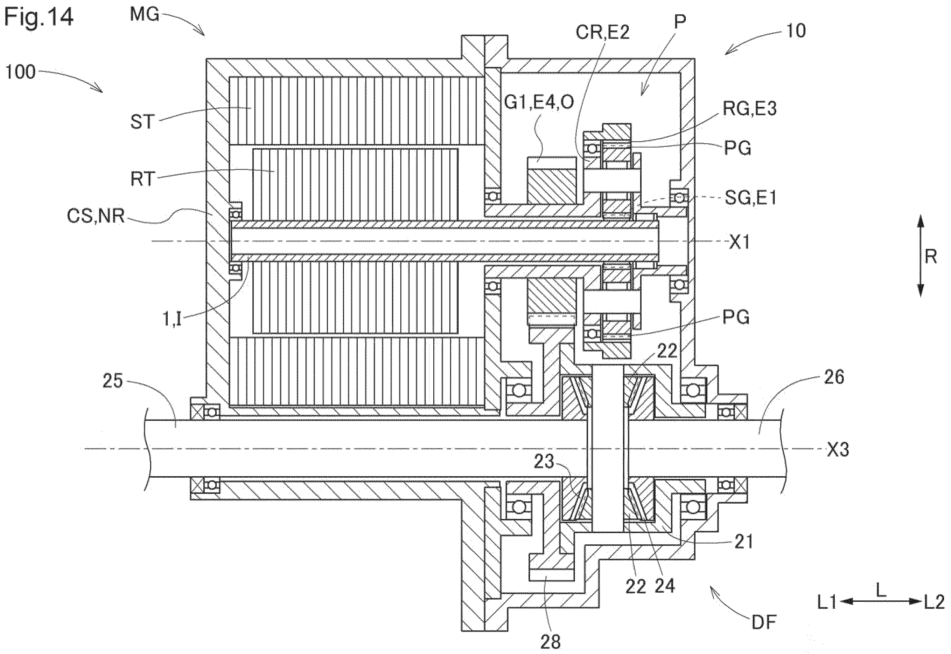

Hereinafter, the vehicle transmission 10 according to a sixth embodiment will be described with reference to FIGS. 14 to 16. The present embodiment is different from the second embodiment in the configuration of the planetary gear mechanism P and the switching mechanism S. The following description focuses on the differences from the second embodiment. The present embodiment is the same as the second embodiment in terms of points that are not particularly described below.

As shown in FIGS. 14 to 16, in the present embodiment, the fourth rotating element E4 does not rotate with the first rotating element E1, and is connected to the second rotating element E2 so as to rotate with the second rotating element E2. That is, in the present embodiment, the first gear G1 does not rotate with the sun gear SG, and is connected to the carrier CR so as to rotate with the carrier CR. In the present embodiment, the first gear G1 is an external gear that meshes with the differential input gear 28. That is, the output gear 27 that rotates with the carrier CR and meshes with the differential input gear 28 in the second embodiment is not provided in the present embodiment. Therefore, in the present embodiment, the first gear G1 that is the fourth rotating element E4 serves as the output member O.

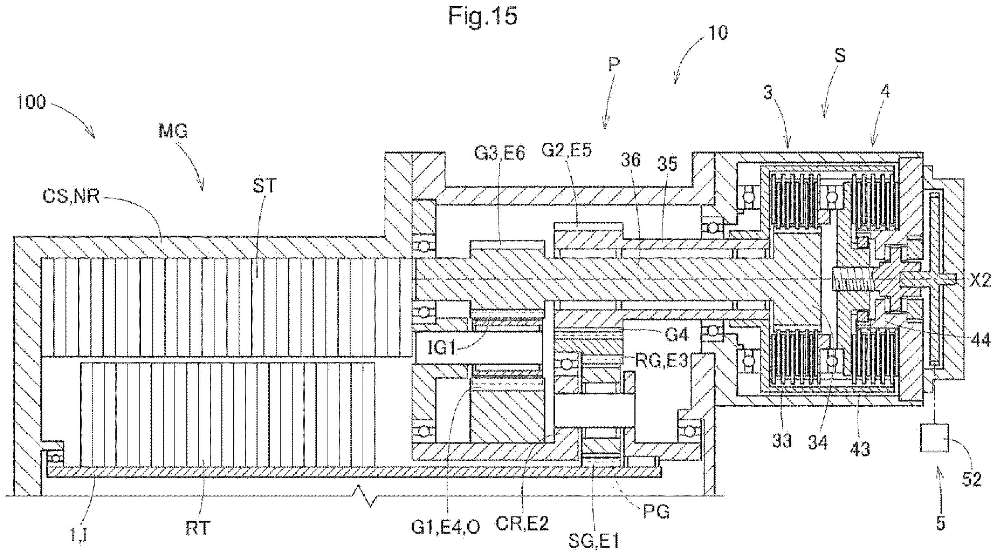

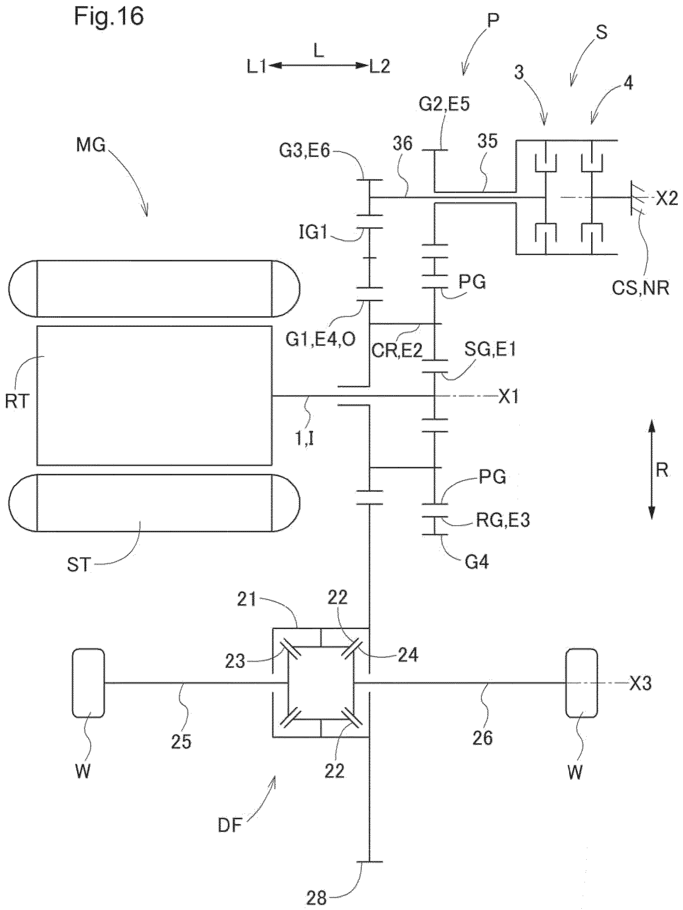

As shown in FIGS. 15 and 16, in the present embodiment, the third gear G3 meshes with the first idler gear IG1 that meshes with the first gear G1. That is, in the present embodiment, the third gear G3 and the first gear G1 mesh with the first idler gear IG1 at different circumferential positions of the first idler gear IG1.

### 7. Seventh Embodiment

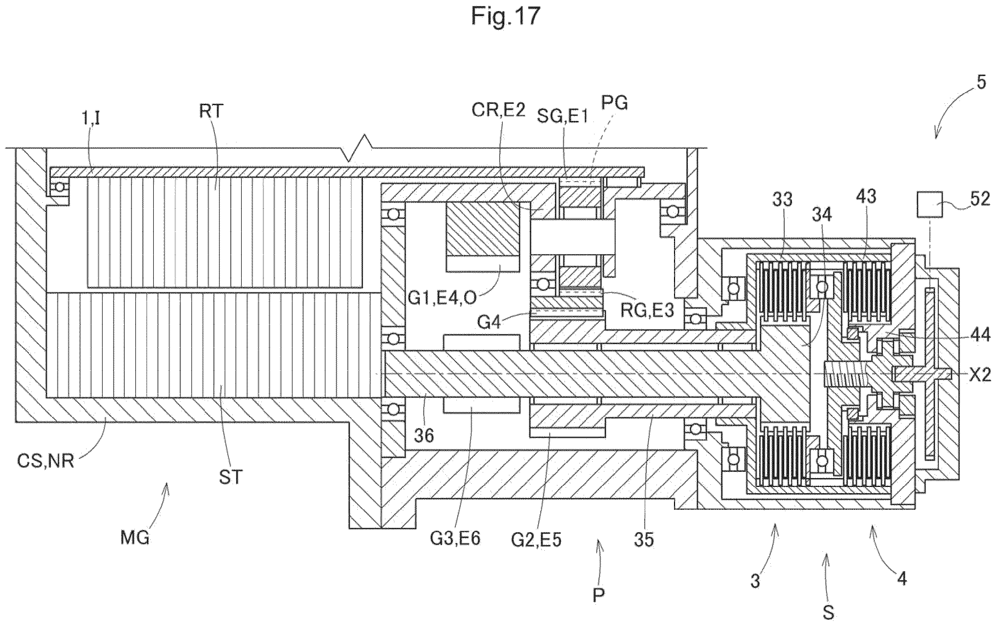

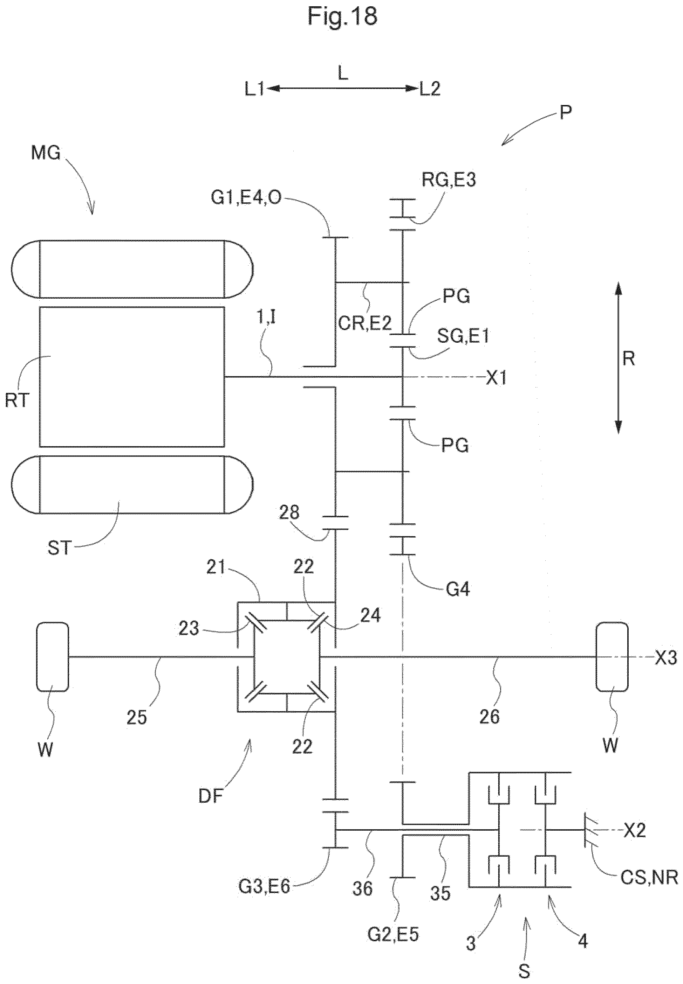

Hereinafter, the vehicle transmission 10 according to a seventh embodiment will be described with reference to FIGS. 17 and 18. The present embodiment is the same as the sixth embodiment in terms of the configuration shown in FIG. 14. The present embodiment is different from the sixth embodiment in the configuration of the switching mechanism S. The following description focuses on the differences from the sixth embodiment. The present embodiment is the same as the sixth embodiment in terms of points that are not particularly described below.

As shown in FIGS. 17 and 18, the first idler gear IG1 is not provided in the present embodiment. The third gear G3 meshes with the differential input gear 28. In the present embodiment, the first gear G1 meshes with the differential input gear 28 as in the sixth embodiment. Therefore, in the present embodiment, the third gear G3 and the first gear G1 mesh with the differential input gear 28 at different circumferential positions of the differential input gear 28. In the present embodiment, the differential input gear 28 corresponds to the "gear that meshes with the first gear G1."

### 8. Other Embodiments

(1) The above embodiments illustrate an example in which the third gear G3 meshes with the first idler gear IG1 that meshes with the first gear G1. However, the present invention is not limited to such a configuration, and the third gear G3 may directly mesh with the first gear G1. In this configuration, when the first engagement mechanism 3 is in the engaged state and the second engagement mechanism 4 is in the disengaged state (i.e., the first shift speed S1 is formed) and the input member I is rotating, the third rotating element E3 rotates in the same direction as the first rotating element E1. The speed ratio of the first shift speed S1 that is formed when the first engagement mechanism 3 is switched to the engaged state and the second engagement mechanism 4 is switched to the disengaged state is lower than the speed ratio of the second shift speed S2 that is formed when the first engagement mechanism 3 is switched to the disengaged state and the second engagement mechanism 4 is switched to the engaged state.
   (1) The above embodiments illustrate an example in which the driving source is the rotating electrical machine MG. However, the present invention is not limited to such a configuration, and the driving force source may be an internal combustion engine.
   (2) The above embodiments illustrate an example in which each of the first linear motion conversion mechanism 53 and the second linear motion conversion mechanism 73 is a screw linear motion conversion mechanism. However, the present invention is not limited to such a configuration. For example, either or both of the first linear motion conversion mechanism 53 and the second linear motion conversion mechanism 73 may include a rail and a sliding member that slides along the rail.
   (3) The first embodiment etc. illustrate an example in which the planetary gear mechanism P is a single-pinion planetary gear mechanism. However, the present invention is not limited to such a configuration, and the planetary gear mechanism P may be a double-pinion planetary gear mechanism. In this case, for example, the first rotating element E1 may be the sun gear SG, the second rotating element E2 may be the ring gear RG, and the third rotating element E3 may be the carrier CR.
   (4) The configuration disclosed in each of the above embodiments is applicable in combination with any of the configurations disclosed in the other embodiments as long as no contradiction arises. Regarding the other configurations as well, the embodiments disclosed in the present specification are merely illustrative in all respects. Therefore, various modifications can be made as appropriate without departing from the spirit and scope of the present disclosure.

### [Summary of Embodiments]

Hereinafter, an overview of the vehicle transmission (10) described above will be provided.

The vehicle transmission (10) is a vehicle transmission (10) including
an input member (I) drivingly connected to a driving source (MG);
an output member (O) drivingly connected to a wheel (W);
a planetary gear mechanism (P) including a first rotating element (E1), a second rotating element (E2), and a third rotating element (E3), and configured such that the order of the rotational speeds of these rotating elements are the first rotating element (E1), the second rotating element (E2), and the third rotating element (E3); and
a switching mechanism (S) configured to switch the state of the planetary gear mechanism (P).

The first rotating element (E1) is connected to the input member (I) so as to rotate with the input member (I).

The second rotating element (E2) is connected to the output member (O) so as to rotate with the output member (O).

The switching mechanism (S) includes
a fourth rotating element (E4) disposed on a first axis (X1) that is an axis on which the planetary gear mechanism (P) is disposed, and connected to the first rotating element (E1) or the second rotating element (E2) so as to rotate with the first rotating element (E1) or the second rotating element (E2),
a fifth rotating element (E5) disposed on a second axis (X2) that is an axis different from the first axis (X1), and configured to rotate in conjunction with the third rotating element (E3), a sixth rotating element (E6) disposed on the second axis (X2) and configured to rotate in conjunction with the fourth rotating element (E4),
a first engagement mechanism (3) configured to connect and disconnect power transmission between the fifth rotating element (E5) and the sixth rotating element (E6), and
a second engagement mechanism (4) configured to selectively fix the fifth rotating element (E5) to a non-rotating member (NR).

With this configuration, when the first engagement mechanism (3) is switched to an engaged state and the second engagement mechanism (4) is switched to a disengaged state, the fifth rotating element (E5) and the sixth rotating element (E6) rotate together. A first shift speed (S1) can thus be formed in which rotation of the input member (I) is reduced in speed and transmitted to the output member (O) at a constant rotational speed ratio between the first rotating element (E1) and the third rotating element (E3). When the first engagement mechanism (3) is switched to the disengaged state and the second engagement mechanism (4) is switched to the engaged state, the fifth rotating element (E5) is fixed to the non-rotating member (NR). A second shift speed (S2) can thus be formed in which rotation of the input member (I) is reduced in speed and transmitted to the output member (O).

In this configuration, the first rotating element (E1) of the planetary gear mechanism (P) is connected to the input member (I) so as to rotate with the input member (I), and the second rotating element (E2) of the planetary gear mechanism (P) is connected to the output member (O) so as to rotate with the output member (O). Therefore, the input member (I) and the output member (O) are disposed on the first axis (X1). The fifth rotating element (E5) and the sixth rotating element (E6) of the switching mechanism (S) are disposed on the second axis (X2). The first engagement mechanism (3) of the switching mechanism (S) is configured to connect and disconnect power transmission between the fifth rotating element (E5) and the sixth rotating element (E6), and the second engagement mechanism (4) of the switching mechanism (S) is configured to selectively fix the fifth rotating element (E5) to the non-rotating member (NR).

As described above, with this configuration, the first shift speed (S1) and the second shift speed (S2) can be selectively formed by the input member (I) and the output member (O) that are disposed coaxially with the planetary gear mechanism (P), and the switching mechanism (S) partially disposed on a different axis from the planetary gear mechanism (P). This facilitates reduction in size of at least part of the vehicle transmission (10) in the radial direction (R) in the configuration including the planetary gear mechanism (P) and the switching mechanism (S) configured to switch the state of the planetary gear mechanism (P).

It is preferable that a power transmission path between the third rotating element (E3) and the fifth rotating element (E5) and a power transmission path between the fourth rotating element (E4) and the sixth rotating element (E6) be provided such that the third rotating element (E3) rotates in the opposite direction to the first rotating element (E1) when the first engagement mechanism (3) is in the engaged state, the second engagement mechanism (4) is in the disengaged state, and the input member (I) is rotating.

With this configuration, the speed ratio of the first shift speed (S1) that is formed when the first engagement mechanism (3) is switched to the engaged state and the second engagement mechanism (4) is switched to the disengaged state is higher than the speed ratio of the second shift speed (S2) that is formed when the first engagement mechanism (3) is switched to the disengaged state and the second engagement mechanism (4) is switched to the engaged state. With this configuration, the planetary gear mechanism (P) is configured such that the number of rotating elements needed to provide the power transmission paths is smaller for the second shift speed (S2) than for the first shift speed (S1). Therefore, the transmission efficiency of the driving force is higher at the second shift speed (S2) that is more frequently used for traveling at high speeds than the first shift speed (S1). This configuration facilitates improvement in energy efficiency for traveling of the vehicle.

It is preferable that the switching mechanism (S) further include a third engagement mechanism (6) that is a friction engagement mechanism configured to selectively fix the fourth rotating element (E4) to the non-rotating member (NR).

With this configuration, even when the shift speed is to be shifted (upshifted) from a shift speed with a high speed ratio to a shift speed with a low speed ratio at which the rotational speed of the input member (I) for the same vehicle speed is low, but the driving source (MG) is not able to output negative torque, the rotational speed of the input member (I) can be reduced by switching the third engagement mechanism (6) to the slip-engaged state. The shifting can thus be quickly performed.

Moreover, with this configuration, either the first engagement mechanism (3) or the second engagement mechanism (4) and the third engagement mechanism (6) can be engaged with each other to serve as a parking brake.

It is preferable that the first rotating element (E1) be a sun gear (SG),
the second rotating element (E2) be a carrier (CR),
the third rotating element (E3) be an internal ring gear (RG),
the switching mechanism (S) include
a first gear (G1) that is the fourth rotating element (E4),
a second gear (G2) that is the fifth rotating element (E5),
a third gear (G3) that is the sixth rotating element (E6), and
a fourth gear G4 that is an external gear configured to rotate with the ring gear RG,
the second gear (G2) be configured to mesh with the fourth gear (G4), and
the third gear (G3) be configured to mesh with the first gear (G1) or to mesh with a gear (IG1) configured to mesh with the first gear (G1).

With this configuration, a vehicle transmission (10) with a small dimension in the radial direction (R) can be implemented with a simple configuration.

In the above configuration, it is preferable that the vehicle transmission (10) further include a differential gear mechanism (DF) disposed on a third axis (X3) that is an axis different from the first axis (X1) and the second axis (X2),
the differential gear mechanism (DF) include a differential input gear (28) and be configured to distribute rotation of the differential input gear (28) to a pair of the wheels (W),
the first gear (G1) be an external gear configured to rotate with the carrier (CR) and to mesh with the differential input gear (28), and
the third gear (G3) be configured to mesh with the gear (IG1) configured to mesh with the first gear (G1), or be configured to mesh with the differential input gear (28).

This configuration facilitates reduction in number of gears arranged on each axis even when the differential gear mechanism (DF) is disposed on the third axis (X3) different from the first axis (X1) and the second axis (X2). As a result, the configuration of the vehicle transmission (10) can be easily simplified.

It is preferable that the first engagement mechanism (3) and the second engagement mechanism (4) be disposed next to each other on the second axis (X2), and be configured to be driven by a common drive mechanism (5),
the drive mechanism (5) include: an engagement member (51) configured to operate to selectively switch either the first engagement mechanism (3) or the second engagement mechanism (4) to the engaged state; a drive motor (52); and a screw linear motion conversion mechanism (53) configured to convert a rotational driving force of the drive motor (52) to a driving force in a direction along the second axis (X2) and transmit the driving force to the engagement member (51),
when the drive motor (52) is driven to rotate toward a first side, the first engagement mechanism (3) be switched to the engaged state and the second engagement mechanism (4) be switched to the disengaged state, and
when the drive motor (52) is driven to rotate toward a second side opposite to the first side, the second engagement mechanism (4) be switched to the engaged state and the first engagement mechanism (3) be switched to the disengaged state.

In this configuration, the drive mechanism (5) configured to drive the first engagement mechanism (3) and the second engagement mechanism (4) includes the drive motor (52) and the linear motion conversion mechanism (53) that is a screw linear motion conversion mechanism. This facilitates reduction in size of the vehicle transmission (10) compared to a case where a hydraulic drive mechanism is used.

### INDUSTRIAL APPLICABILITY

The technique according to the present disclosure is applicable to vehicle transmissions including an input member drivingly connected to a driving source, an output member drivingly connected to a wheel, a planetary gear mechanism, and a switching mechanism configured to switch the state of the planetary gear mechanism.

### Description of the Reference Numerals

10: vehicle transmission, I: input member, O: output member, P: planetary gear mechanism, E1: first rotating element, E2: second rotating element, E3: third rotating element, SG: sun gear, CR: carrier, RG: ring gear, S: switching mechanism, E4: fourth rotating element, E5: fifth rotating element, E6: sixth rotating element, 3: first engagement mechanism, 4: second engagement mechanism, 5: first drive mechanism (drive mechanism), 51: first engagement member (engagement member), 52: first drive motor (drive motor), 53: first linear motion conversion mechanism (linear motion conversion mechanism), 6: third engagement mechanism, DF: differential gear mechanism, G1: first gear, G2: second gear, G3: third gear, G4: fourth gear, NR: non-rotating member, MG: rotating electrical machine (driving source), W: wheel, X1: first axis, X2: second axis, X3: third axis

## Claims

1. A vehicle transmission comprising:
an input member drivingly connected to a driving source;
an output member drivingly connected to a wheel;
a planetary gear mechanism including a first rotating element, a second rotating element, and a third rotating element, the planetary gear mechanism being configured such that an order of rotational speeds of the first rotating element, the second rotating element, and the third rotating element are the first rotating element, the second rotating element, and the third rotating element; and
a switching mechanism configured to switch a state of the planetary gear mechanism, wherein:
the first rotating element is connected to the input member so as to rotate with the input member;
the second rotating element is connected to the output member so as to rotate with the output member; and
the switching mechanism includes
a fourth rotating element disposed on a first axis that is an axis on which the planetary gear mechanism is disposed, the fourth rotating element being connected to the first rotating element or the second rotating element so as to rotate with the first rotating element or the second rotating element,
a fifth rotating element disposed on a second axis that is an axis different from the first axis, the fifth rotating element being configured to rotate in conjunction with the third rotating element,
a sixth rotating element disposed on the second axis, the sixth rotating element being configured to rotate in conjunction with the fourth rotating element,
a first engagement mechanism configured to connect and disconnect power transmission between the fifth rotating element and the sixth rotating element, and
a second engagement mechanism configured to selectively fix the fifth rotating element to a non-rotating member.

2. The vehicle transmission according to claim 1, wherein a power transmission path between the third rotating element and the fifth rotating element and a power transmission path between the fourth rotating element and the sixth rotating element are provided such that the third rotating element rotates in an opposite direction to the first rotating element when the first engagement mechanism is in an engaged state, the second engagement mechanism is in a disengaged state, and the input member is rotating.

3. The vehicle transmission according to claim 1, wherein the switching mechanism further includes a third engagement mechanism that is a friction engagement mechanism configured to selectively fix the fourth rotating element to the non-rotating member.

4. The vehicle transmission according to any one of claims 1 to 3, wherein:
the first rotating element is a sun gear;
the second rotating element is a carrier;
the third rotating element is an internal ring gear;
the switching mechanism includes
a first gear that is the fourth rotating element,
a second gear that is the fifth rotating element,
a third gear that is the sixth rotating element, and
a fourth gear that is an external gear configured to rotate with the ring gear;
the second gear is configured to mesh with the fourth gear; and
the third gear is configured to mesh with the first gear or to mesh with a gear configured to mesh with the first gear.

5. The vehicle transmission according to claim 4, wherein:
the vehicle transmission further includes a differential gear mechanism disposed on a third axis that is an axis different from the first axis and the second axis;
the differential gear mechanism includes a differential input gear, and is configured to distribute rotation of the differential input gear to a pair of the wheels;
the first gear is an external gear configured to rotate with the carrier and to mesh with the differential input gear; and
the third gear is configured to mesh with the gear configured to mesh with the first gear, or is configured to mesh with the differential input gear.

6. The vehicle transmission according to any one of claims 1 to 3, wherein:
the first engagement mechanism and the second engagement mechanism are disposed next to each other on the second axis, and are configured to be driven by a common drive mechanism;
the drive mechanism includes
an engagement member configured to operate to selectively switch either the first engagement mechanism or the second engagement mechanism to an engaged state,
a drive motor, and
a screw linear motion conversion mechanism configured to convert a rotational driving force of the drive motor to a driving force in a direction along the second axis and transmit the driving force to the engagement member,
when the drive motor is driven to rotate toward a first side, the first engagement mechanism is switched to the engaged state and the second engagement mechanism is switched to a disengaged state; and
when the drive motor is driven to rotate toward a second side opposite to the first side, the second engagement mechanism is switched to the engaged state and the first engagement mechanism is switched to the disengaged state.
